# EUROPEAN PATENT SPECIFICATION

(11) **EP 3 995 984 B1**
(45) Date of publication and mention of the grant of the patent: **18.12.2024**
(21) Application number: 20306338.3
(22) Date of filing: 05.11.2020
(51) Int. Cl.: G06F 30/10, G06T 17/20

(54) **CELL SHRINK WRAP**
HÜLLEN FÜR ZELLBASIERTE DREIDIMENSIONALE MODELLE DURCH SCHRUMPFUNG
COUVERTURES POUR MODÈLES TRIDIMENSIONNELS À BASE DE CELLULES PAR RÉTRACTION

(43) Date of publication of application: 11.05.2022
(73) Proprietor: Dassault Systemes Deutschland GmbH, 70563 Stuttgart (DE)
(72) Inventor: Sussner, Gerd, 81541 München (DE)
(74) Representative: Bandpay & Greuter

(56) References cited:
- US-A1- 2005 134 586
- US-B1- 9 922 453
- RODRIGUEZ J ET AL: "Fast neighborhood operations for images and volume data sets", COMPUTERS AND GRAPHICS, ELSEVIER, GB, vol. 27, no. 6, 1 December 2003 (2003-12-01), pages 931 - 942, XP004472100, ISSN: 0097-8493, DOI: 10.1016/J.CAG.2003.08.015
- ANONYMOUS: "PRO/ENGINEER 2001. Pro/ASSEMBLY (Advanced) Topic Collection", INTERNET CITATION, 6 September 2000 (2000-09-06), XP002262124, Retrieved from the Internet <URL:http://www.bnl.gov/magnets/Staff/Loftus/aax.pdf> [retrieved on 20031119]
- ADIGA ET AL: "Particle picking by segmentation: A comparative study with SPIDER-based manual particle picking", JOURNAL OF STRUCTURAL BIOLOGY, ACADEMIC PRESS, UNITED STATES, vol. 152, no. 3, 1 December 2005 (2005-12-01), pages 211 - 220, XP005206881, ISSN: 1047-8477, DOI: 10.1016/J.JSB.2005.09.007

## Description

### FIELD OF THE INVENTION

The invention relates to the field of computer programs and systems, and more specifically to a methods, systems and program for designing an envelope of a modeled object.

### BACKGROUND

A number of systems and programs are offered on the market for the design, the engineering and the manufacturing of objects. CAD is an acronym for Computer-Aided Design, e.g. it relates to software solutions for designing an object. CAE is an acronym for Computer-Aided Engineering, e.g. it relates to software solutions for simulating the physical behavior of a future product. CAM is an acronym for Computer-Aided Manufacturing, e.g. it relates to software solutions for defining manufacturing processes and operations. In such computer-aided design systems, the graphical user interface plays an important role as regards the efficiency of the technique. These techniques may be embedded within Product Lifecycle Management (PLM) systems. PLM refers to a business strategy that helps companies to share product data, apply common processes, and leverage corporate knowledge for the development of products from conception to the end of their life, across the concept of extended enterprise. The PLM solutions provided by Dassault Systèmes (under the trademarks CATIA, ENOVIA and DELMIA) provide an Engineering Hub, which organizes product engineering knowledge, a Manufacturing Hub, which manages manufacturing engineering knowledge, and an Enterprise Hub which enables enterprise integrations and connections into both the Engineering and Manufacturing Hubs. All together the system delivers an open object model linking products, processes, resources to enable dynamic, knowledge-based product creation and decision support that drives optimized product definition, manufacturing preparation, production and service.

In this context, the field of computer graphics offers technologies which are more and more useful. Models of real-world objects are represented by complex geometries. In several design processes in industry there is the need for envelopes, e.g., models enclosing the original model that simplifies the detail of the geometric features of the modeled object while respecting design intent of the modeled object, i.e., designer's specifications related to the use and purpose of the object in the real world. The design intent of the modeled object thus specifies the main geometric and topological features of the modeled object. The main geometric features may consist of convex and non-convex regions, and/ or holes or gaps present in the model. During the design process, it may be necessary to discard non visible geometries, or simplify a modeled object. Such models may comprise complex geometries consisting of millions of elements, that may not be visible to the user (i.e., not relevant for the design intent) but are rendered nonetheless. The rendering may become increasingly difficult for highly complex models, for example, 3D models may comprise hundreds of millions of triangles comprising geometries not visible to the user, or other interior geometries unnecessary for a design process. The rendering thus demands a computational load that affects ergonomics of the user within a design process, e.g., caused by frame rates that are too low so as to allow real-time interaction. In such cases, non-visible geometries may be manually removed to keep only the exterior geometry. However, removing non-visible geometries manually is an expensive and time-consuming procedure for complex models. In addition, the exterior geometry may still comprise details that may be unnecessary for the design task at hand, or it may still be too complex to allow for real-time rendering.

Envelopes may reduce the complexity of the geometric appearance by removing unnecessary geometry while still preserving the main topological features and thus maintaining design intent. This is for instance the case computer simulations that involve augmented reality. Models may be too complex to be rendered in commercial machines even if the non-visible geometry is not rendered. Within this context, impostor geometries are meshes with low triangle count representing the actual model. With this impostor geometry (also known as replacement model) the appearance of the original model is "baked" (as known *per se* in the field of computer graphics) into textures for the impostor. As another example, simulating a body in a fluid may require to simulate the fluid dynamics only of the main topological features. Envelopes of the model still preserve the main topology, but close small gaps or close holes within parts that do affect the simulation intent.

Some techniques exist to obtain envelopes, which can be used for some of the above applications. In the context of 3D graphics, wraps are used to remove non-visible faces of 3D models, thus reducing the number of triangles. Said wraps may be used by Jacketing.

The following approaches describe the technique of Jacketing, i.e determining the visibility of faces of a model

A first approach is rendering the model from different camera views: in this approach, the 3D model in 3D space and many cameras are placed around the model. For each camera, a picture representing the 3D model viewed by the camera is rendered. Each face which creates a pixel in that picture remains a visible face, while faces which have not created a pixel from any camera are removed.

However the first approach has several disadvantages. The first one is that the resolution of the picture limits the detail of the wrap: less details of the picture involves less details of the wrap. Secondly, the detail of the wrap depends on the number of cameras. However, high density of cameras, and the resolution of each picture captured by each camera, results in long computing times that become prohibitive for complex models. Third drawback, there is no guarantee that the design intent will be preserved. Indeed, non-convex regions are not properly covered, or faces may be removed although they are visible from a different (closer) view.

Shooting "visibility rays" from a surrounding sphere is a second approach. This approach extends from the method of rendering the model from different camera views. The origin of the rays is placed on the sphere (surrounding the model) and rays are shot towards the model. Faces hit by a ray remain visible while faces not hit by any ray are removed.

But this approach include has also disadvantages.

Similarly as in the first approach, the detail of the wrap depends on the density of the rays. However, a high density of rays results in a long processing time that becomes prohibitive for large designs. A second con's is that the design intent may not be preserved, as non-convex regions are not properly covered, and faces may be removed although they are visible from a different (closer) view.

Shrink-Wrap is an approach in which a bounding sphere surrounded the model is shrunk and deformed. The geometry of the deformed sphere approaches the model, that is, the deformed sphere does not intersect the original model but keeps a small distance to the object. The wrap usually covers small holes due to the "stiffness" of the wrap but it may cover as well bigger openings. The origin of the rays is then placed on the wrap mesh and shot towards the mesh of the 3D model.

Some disadvantages of this third approach are now discussed. Firstly, deforming the surrounding sphere requires an adaptive refinement of the wrap mesh and intersection tests with the original geometry. This results in long processing times that become prohibitive for large scale models. Secondly, the design intent is not preserved by this approach. This is notably the case when the design intent includes topological features such as holes, which are not be respected by the deformed sphere. For example, as known per se from the field of topology, it is not possible to obtain with this method a wrap of a donut (having a continuous surface and hole). Indeed, the wrap of a donut would touch itself at the region of the hole. Since the initial sphere is just adaptively refined but not opened by any cut, it is not possible to get an equivalent wrap-shape for objects with multiple holes. The same problem applies for any geometric object that is continuously shrunk and deformed, as known per se from the field of topology. Notably, in the case of impostor geometries, the texture content of the impostor at the improperly covered region is undefined, therefore the impostor geometry shows aberrations when rendered.

In addition, the design intent may not be preserved either as faces may be removed although they are visible from a different (closer) view.

An approach known as Local Convex Hull Envelope is now discussed. In this approach, the model is partitioned into a grid of cells containing sub-volumes, also called voxels in a 3D setting. For each sub-volume, a convex hull geometry is computed. At the end, all hull geometries are merged in order to get a continuous hull surface for the complete model.

This fourth approach has some disadvantages. The size of the sub-volumes of the grid determines the size of the gaps which are to be closed, thereby affecting design intent. If the size of the sub-volumes is substantially smaller than the gaps of the model (e.g., more than two times smaller), the envelope then enters the interior geometry through gaps that include interior (i.e., non-visible) geometry of the modeled object, thereby capturing unnecessary detail. If it is too big, all of the gaps having size smaller than the sub-volume may be ignored and some geometric regions (e.g., non-convex regions) are not properly covered, therefore the envelope losses a lot of detail, or captures incorrectly some geometric regions or topological features, thereby the design intent is not preserved. In this setting, the user thus has to specify the size of the sub-volumes beforehand. In addition, the constraints may be too prohibitive to be implemented and/or no suitable choice can be made to keep design intent, i.e., faces may be removed although they are visible from a different view or many faces are not removed although they are not visible.

Existing modeling software packages for generating wraps, using techniques similar to the approaches described above, such as:
- Autodesk Maya uses methods similar to the Shrink-Wrap method. Notably, it requires manual interaction for retopologizing the mesh, so as to allow for closing larger gaps or holes.
- Blender uses as well a version of the Shrink-Wrap method, but it further allows to use another object to be shrinked to the surface of the modeled object. However, as in the Shrink-Wrap method, the shrinked object does not respect the topology of the model. Thus, the user has to manually verify that wrap is correct around a hole.
- Houdini creates a convex hull of the points of the model. The disadvantages of the local convex hull method, remain, e.g., the size of the sub-volumes determines the size of the holes which are closed.

Within this context, and other contexts, there is still need for an improved method for designing an envelope of a modeled object.

### PRIOR ART

Document US 9 922 453 B1 by Kunaseelan Kanthsamy et al., published on 20 March 2018, discloses a method for generating a shrink wrap around a model of physical object, involving generating a specific projection for a set of wrapper vertices using a seed-based closest point method or the center of adjacent wrapper vertices.

Document "Fast neighborhood operations for images and volume data sets" by J Rodriguez et al., In: Computers and Graphics, Elsevier, GB, vol. 27, no. 6, published on 1 December 2003, pages 931-942, ISSN: 0097-8493, DOI: 10.1016/J.CAG.2003.08.015, discloses an approach to carry out erosion, dilation and connected component labeling using an extreme vertices model, an orthogonal polyhedra representation, to describe binary images and volume data sets.

### SUMMARY

The invention is set out in the appended set of claims.

### BRIEF DESCRIPTION OF THE DRAWINGS

Embodiments of the invention will now be described, by way of non-limiting example, and in reference to the accompanying drawings, where:
- FIG. 1 shows a flowchart of an example of the method;
- FIG. 2 shows an example of a graphical user interface of the system wherein an envelope may be displayed;
- FIG. 3 shows an example of the system;
- FIGs. 4-8 show an example implementation flowchart of the method;
- FIGs. 9 to 14 shows an example of determination of an envelope in a 2D modeled object;
- FIGs. 15 to 32 show another example of determination of an envelope in a 2D modeled object;
- FIGs. 33 to 35 shows an example of a determined envelope of a 3D modeled object representing a vehicle; and
- FIGs. 36 to 38 shows an example of a determined envelope of a 3D modeled object representing a bicycle.

### DETAILED DESCRIPTION OF THE INVENTION

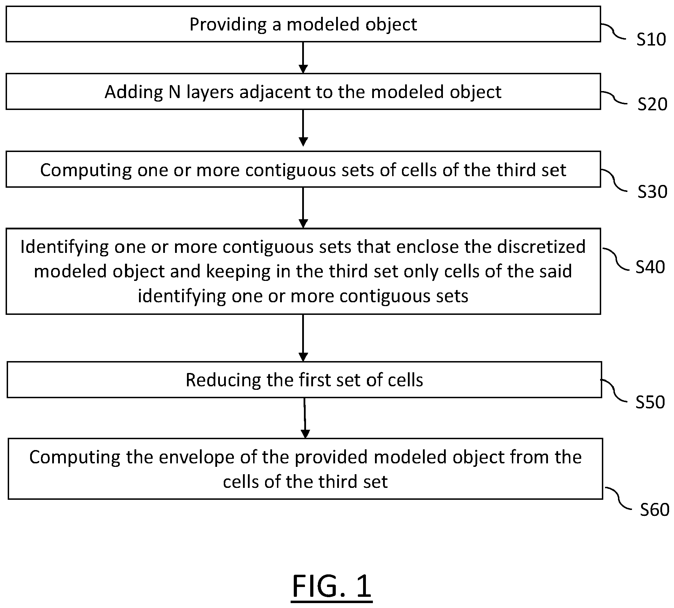

Referring to FIG. 1, it is provided a computer-implemented method for designing an envelope of a modeled object. The method comprises providing S10 a modeled object. The modeled object is discretized into a grid of cells, thereby obtaining a grid comprising a first set of cells intersected by the modeled object and a second set of empty cells. The method further comprises adding S20 *N* layers adjacent to the modeled object that is discretized into a grid of cells. *N* is a positive integer number and represents a number of layers added. The layers are added successively, thus there exist *p* values, being ordered positive integer numbers less than N, indicating the addition of a corresponding layer until reaching the number N. For example, *p* has at least the value *p*=1 if only one layer is added *N*=1. A first layer is added for *p*=1, a second one for *p*=2, a third one for *p*=3, and so on ... and a N^{th} layer is added for *p*=N. The adding *N* layers comprises, successively for each added layer of the first N-1 layers added, performing identifying empty cells of the second set that are neighbors of intersected cells of the first set, adding the identified cells of the second set to the set of cells of the first set. The adding *N* layers further comprises, for the N^{th} layer, performing identifying empty cells of the second set that are neighbors of intersected cells of the first set, and adding the identified empty cells of the second set to a third set of cells. The cells of the third set are a new category of cells, which define cells of the grid of cells that are to be used for computing the envelope.

The method further comprises computing S30 one or more contiguous sets of cells of the third set. The method thus computes sets of cells of the third set that are adjacent, (i.e., next to each other) in the grid of cells. For example, a line or curve may be traced in the grid across one of said contiguous sets, intersecting all of the cells of said set, without having any cells in between belonging to another set. Thus, this step ensures that any candidate envelope computed from the third set of cells yields a connected shape which is closed.

The method further comprises identifying S40 one or more contiguous sets that enclose the discretized modeled object and keeping in the third set only cells of the said identifying one or more contiguous sets. For example, a bounding volume may be traced in the grid intersecting the kept cells of the third set, thereby constructing a candidate envelope.

The method further comprises reducing S50 the first set of cells. The reducing comprises performing, for each added N-1 layers, identifying cells of the third set that are neighbor of cells of the first set and adding the cells of the first set having as neighbors the identified cells of the third set to the third set of cells. Thus, the method extends contiguous sets that enclosed the discretized modeled object towards the added layers, yielding a candidate envelope.

The method further comprises computing S60 the envelope of the provided modeled object from the cells of the third set.

The method provides an improved solution for designing an envelope of a modeled object. The envelope is designed based on a modeled object discretized in a grid of cells so that two categories of cells are obtained: a first set of cells intersected by the modeled object and a second set of empty cells. The two categories of cells of the modeled object allow to identify the spatial distribution of the part of the modeled object that comprise matter. The provided modeled object is thus simplified so that the next operations of the method can be performed on sets of cells of the two said categories. Such operations may be amenable to a highly parallel implementation that exploits pointers to the two said categories, allowing an efficient implementation that improves computational speed. Thus, the time to compute an envelope can be reduced significantly, thus further improving ergonomics to the end user.

Moreover, the method determines a cell-based envelope of the input model that has a simplified geometry which is preferable for e.g., interactive design process design, yet preserving design intent. Design intent is preserved due to the model closing small gaps and that the envelope is computed from a candidate envelope of cells that encloses the modeled object with gaps closed. Gaps are closed due to the added layers that expand the distribution of the modeled object represented by the cells of the first set in the grid. This is comparable to a heating process of the matter of the modeled object. Gaps of the modeled object that are of size less than the size of the added N-layers in the grid are covered. In other words, matter is added to the modeled object via the N-layers said gaps, automatically and independently of the size of the grid of cells. The last layer (the N^{th} layer) added by the method is a layer comprising cells forming one or more contiguous sets of cells of the third set, thereby defining one or more candidate envelopes from the contiguous sets of cells of the third set. The identification of one or more contiguous sets allows to identify candidate envelopes of the modeled object. Next, since matter has been extended in all directions of the modeled object, the added matter is removed via the reducing step by identifying that the neighbors of the cells consisting of the added matter are cells of the candidate envelope. If that is the case, the cells of added matter are added to the cells of the third set, thereby extending the candidate envelope into the previously occupied by the added mater. This is comparable to a cooling of the modeled object which is carried out via the reducing of the first set of cells. Therefore, the computed envelope shows the main geometrical features of the modeled object, thus preserving the design intent, and with a simplified representation thanks to the removal of gaps.

The method is computer-implemented. This means that steps (or substantially all the steps) of the method are executed by at least one computer, or any system alike. Thus, steps of the method are performed by the computer, possibly fully automatically, or, semi-automatically. In examples, the triggering of at least some of the steps of the method may be performed through user-computer interaction. The level of user-computer interaction required may depend on the level of automatism foreseen and put in balance with the need to implement user's wishes. In examples, this level may be user-defined and/or pre-defined.

A typical example of computer-implementation of a method is to perform the method with a system adapted for this purpose. The system comprises a processor coupled to a memory and may comprise a graphical user interface (GUI), the memory having recorded thereon a computer program comprising instructions for performing the method. The memory may also store a database. The memory is any hardware adapted for such storage, possibly comprising several physical distinct parts (e.g. one for the program, and possibly one for the database).

A modeled object may typically be a 3D modeled object or a 2D modeled object, e.g. representing a product such as a part or an assembly of parts, or possibly an assembly of products. By "3D modeled object", it is meant any object which is modeled by data allowing its 3D representation. A 3D representation allows the viewing of the part from all angles in three-dimensional space. For example, a 3D modeled object, when 3D represented, may be handled and turned around any of its axes, or around any axis in the screen on which the representation is displayed. 3D modeled objects may admit a discretization into cells via voxels, the voxels being defined on a voxel grid. A voxel is a volumetric element which may be identified by three dimensional coordinates (e.g., x-y-z coordinates) corresponding to the location of the voxel in the voxel grid. The voxel may include further information of the 3D modeled object such as, e.g., texture or annotation/setting information. By "2D modeled object" it is meant a 2D representation of an object in two-dimensional space. Such 2D representation may be defined by a 2D geometry. Such 2D geometry may be represented by a matrix data structure representing generally a rectangular grid of pixels, or points of color. 2D geometry may be represented as well in terms of vector graphics, which are defined as vectors in Cartesian space, that is, points of modeled object may be connected by lines and curves to form the shape of the modeled object.

Any modeled object representing a product may have a topological structure defining the distribution of the corresponding modeled object in geometric space. The topological structure of the model is characterized by the number of gaps, holes and/or cavities of the model.

A modeled object is any object defined by data stored e.g. in the database. By extension, the expression "modeled object" designates the data itself. According to the type of the system, the modeled objects may be defined by different kinds of data. The system may indeed be any combination of a CAD system, a CAE system, a CAM system, a PDM system and/or a PLM system. In those different systems, modeled objects are defined by corresponding data. One may accordingly speak of CAD object, PLM object, PDM object, CAE object, CAM object, CAD data, PLM data, PDM data, CAM data, CAE data. However, these systems are not exclusive one of the other, as a modeled object may be defined by data corresponding to any combination of these systems. A system may thus well be both a CAD and PLM system, as will be apparent from the definitions of such systems provided below.

By CAD system, it is additionally meant any system adapted at least for designing a modeled object on the basis of a graphical representation of the modeled object, such as CATIA. In this case, the data defining a modeled object comprise data allowing the representation of the modeled object. A CAD system may for example provide a representation of CAD modeled objects using edges or lines, in certain cases with faces or surfaces. Lines, edges, or surfaces may be represented in various manners, e.g. non-uniform rational B-splines (NURBS). Specifically, a CAD file contains specifications, from which geometry may be generated, which in turn allows for a representation to be generated. Specifications of a modeled object may be stored in a single CAD file or multiple ones. The typical size of a file representing a modeled object in a CAD system is in the range of one Megabyte per part. And a modeled object may typically be an assembly of thousands of parts.

Any modeled object herein, including any envelope obtained by the method, may represent the geometry (3D or 2D) of a product to be manufactured in the real world such as a (e.g. mechanical) part or assembly of parts (or equivalently an assembly of parts, as the assembly of parts may be seen as a part itself from the point of view of the method, or the method may be applied independently to each part of the assembly), or more generally any rigid body assembly (e.g. a mobile mechanism). Any of said modeled objects may thus represent an industrial product which may be any mechanical part, such as a part of a terrestrial vehicle (including e.g. car and light truck equipment, racing cars, motorcycles, truck and motor equipment, trucks and buses, trains), a part of an aerial vehicle (including e.g. airframe equipment, aerospace equipment, propulsion equipment, defense products, airline equipment, space equipment), a part of a naval vehicle (including e.g. navy equipment, commercial ships, offshore equipment, yachts and workboats, marine equipment), a general mechanical part (including e.g. industrial manufacturing machinery, heavy mobile machinery or equipment, installed equipment, industrial equipment product, fabricated metal product, tire manufacturing product), an electro-mechanical or electronic part (including e.g. consumer electronics, security and/or control and/or instrumentation products, computing and communication equipment, semiconductors, medical devices and equipment), a consumer good (including e.g. furniture, home and garden products, leisure goods, fashion products, hard goods retailers' products, soft goods retailers' products), a packaging (including e.g. food and beverage and tobacco, beauty and personal care, household product packaging). Any of said modeled objects may be subsequently integrated into a design process, via a CAD system or software solution A CAD software solution allows the design of products in various and unlimited industrial fields, including: aerospace, architecture, construction, consumer goods, high-tech devices, industrial equipment, transportation, marine, and/or offshore oil/gas production or transportation.

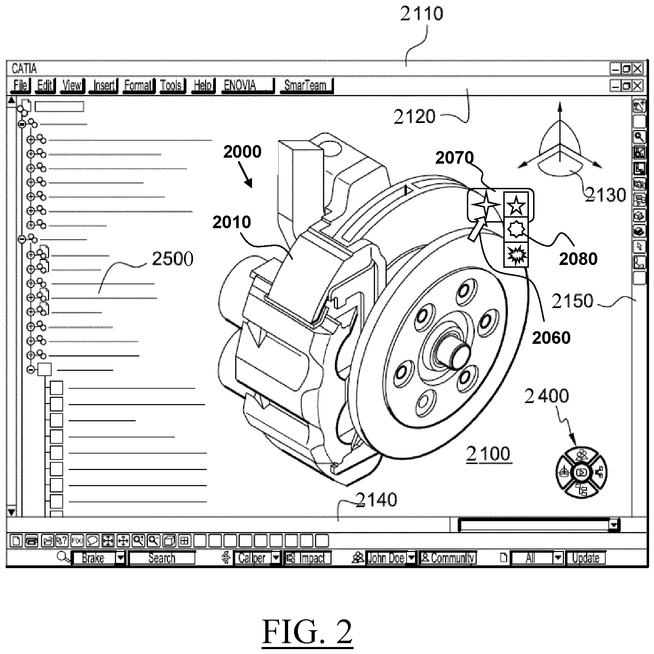

FIG. 2 shows an example of the GUI of the system, wherein the system is a CAD system.

The GUI 2100 may be a typical CAD-like interface, having standard menu bars 2110, 2120, as well as bottom and side toolbars 2140, 2150. Such menu- and toolbars contain a set of user-selectable icons, each icon being associated with one or more operations or functions, as known in the art. Some of these icons are associated with software tools, adapted for editing and/or working on the 3D modeled object 2000 displayed in the GUI 2100. The software tools may be grouped into workbenches. Each workbench comprises a subset of software tools. In particular, one of the workbenches is an edition workbench, suitable for editing geometrical features of the modeled product 2000. In operation, a designer may for example pre-select a part of the object 2000 and then initiate an operation (e.g. change the dimension, color, etc.) or edit geometrical constraints by selecting an appropriate icon. For example, typical CAD operations are the modeling of the punching or the folding of the 3D modeled object displayed on the screen. The GUI may for example display data 2500 related to the displayed product 2000. In the example of the figure, the data 2500, displayed as a "feature tree", and their 3D representation 2000 pertain to a brake assembly including brake caliper and disc. The GUI may further show various types of graphic tools 2130, 2070, 2080 for example for facilitating 3D orientation of the object, for triggering a simulation of an operation of an edited product or render various attributes of the displayed product 2000. A cursor 2060 may be controlled by a haptic device to allow the user to interact with the graphic tools.

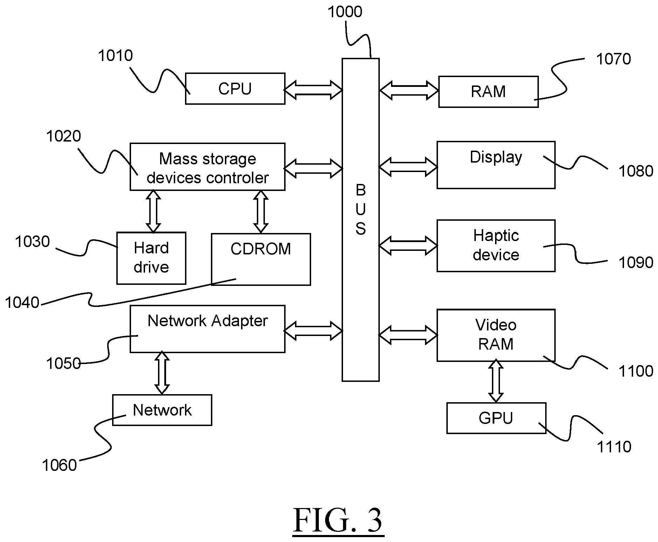

FIG. 3 shows an example of the system, wherein the system is a client computer system, e.g. a workstation of a user.

The client computer of the example comprises a central processing unit (CPU) 1010 connected to an internal communication BUS 1000, a random access memory (RAM) 1070 also connected to the BUS. The client computer is further provided with a graphical processing unit (GPU) 1110 which is associated with a video random access memory 1100 connected to the BUS. Video RAM 1100 is also known in the art as frame buffer. A mass storage device controller 1020 manages accesses to a mass memory device, such as hard drive 1030. Mass memory devices suitable for tangibly embodying computer program instructions and data include all forms of nonvolatile memory, including by way of example semiconductor memory devices, such as EPROM, EEPROM, and flash memory devices; magnetic disks such as internal hard disks and removable disks; magneto-optical disks; and CD-ROM disks 1040. Any of the foregoing may be supplemented by, or incorporated in, specially designed ASICs (application-specific integrated circuits). A network adapter 1050 manages accesses to a network 1060. The client computer may also include a haptic device 1090 such as cursor control device, a keyboard or the like. A cursor control device is used in the client computer to permit the user to selectively position a cursor at any desired location on display 1080. In addition, the cursor control device allows the user to select various commands, and input control signals. The cursor control device includes a number of signal generation devices for input control signals to system. Typically, a cursor control device may be a mouse, the button of the mouse being used to generate the signals. Alternatively or additionally, the client computer system may comprise a sensitive pad, and/or a sensitive screen.

The computer program may comprise instructions executable by a computer, the instructions comprising means for causing the above system to perform the method. The program may be recordable on any data storage medium, including the memory of the system. The program may for example be implemented in digital electronic circuitry, or in computer hardware, firmware, software, or in combinations of them. The program may be implemented as an apparatus, for example a product tangibly embodied in a machine-readable storage device for execution by a programmable processor. Method steps may be performed by a programmable processor executing a program of instructions to perform functions of the method by operating on input data and generating output. The processor may thus be programmable and coupled to receive data and instructions from, and to transmit data and instructions to, a data storage system, at least one input device, and at least one output device. The application program may be implemented in a high-level procedural or object-oriented programming language, or in assembly or machine language if desired. In any case, the language may be a compiled or interpreted language. The program may be a full installation program or an update program. Application of the program on the system results in any case in instructions for performing the method.

Referring back to FIG. 1, the flowchart of the example of the computer-implemented method for designing an envelope of a modeled object is further discussed.

The expression "envelope of a modeled object" means any geometric representation that encloses the modeled object. More precisely, the envelope is a geometric representation that covers external faces of the model object, but without intersecting the modeled object. Thus, in geometrical space, elements composing the envelope (e.g., faces of a mesh, parts of a bounding volume) belong to the complement of the outer boundary of the geometrical representation of the modeled object. Therefore, an envelope of a modeled object has a similar shape thereof. In other words, an envelope maintains similar features, i.e., geometrical or topological features indicative of the shape of the modeled object within the geometrical space where the modeled object is defined. In yet other words, an envelope maintains the design intent of the modeled object, thus discarding non-essential structural elements of the modeled object. By "non-essential" it is therefore meant that said structural elements of the modeled object are not included within designer's specifications on the use and purpose of the real-world object that the modeled object is supposed to represent. For example, an envelope may be a border enclosing an exterior volume of a 3D object, thus discarding all non-visible geometry. In yet another example, an envelope may be a border enclosing an exterior area of a 2D geometry. The level of detail of such borders may be different than that of the border of the 3D object (e.g., of lower resolution).

A modeled object is provided S10 that is discretized into a grid of cells. The discretization of the modeled object may be performed before the providing, that is, a discretized modeled object is provided. Alternatively, the modeled object may be discretized after it has been provided to the system performing the method. Providing the modeled object means that the data defining the object is available by the system. The expression "discretized into a grid of cells" relates to a domain space of the modeled object that is "cut out" (or tessellated) by geometrical elements that may be 3D geometrical elements (e.g. polyhedron) for a 3D grid or 2D geometrical elements (e.g. polygon). The grid of cells may typically be a grid used in finite element analysis, finite volume methods, finite difference methods. The grid may be a regular grid, that is, all the cells of the grid are congruent, having same shape and size. Examples of grids of cells known in the art are now presented. It is to be understood that the claimed method is not limited to these examples and that any grid of cells can be used. The grid of cells may be a cartesian grid where the geometrical elements are unit squares (2D geometrical elements) or unit cubes (3D geometrical elements). The grid of cells may be a rectilinear grid where a tessellation by rectangles (2D geometrical elements) or rectangular cuboids (also known as rectangular parallelepipeds that are 3D geometrical elements). The grid may be a skewed grid with a tessellation of parallelograms (2D geometrical elements) or parallelepipeds (3D geometrical elements). The grid may be a curvilinear grid which is similar to a regular grid where cells are quadrilaterals (2D geometrical elements) or cuboids (3D geometrical elements). Each cell of the grid thus comprises faces, delimited by the grid. A discrete coordinate system can be determined on the grid, where in each cell of the grid is identified by discrete coordinates along the dimensions of the grid. Two cells are neighbors if at least one of the coordinates (along a dimension of the gird) of one cell is a successor or predecessor of the coordinates of the other cell. Two direct neighbors are those wherein just one of the coordinates of one cell is a successor or predecessor of the coordinate values of the other cell. In other words, in a discrete coordinate system, containing discrete values being separated by a cell size, a direct neighbor of a given cell is a cell whose distance coordinates to the given cell differs by only by the cell size. Neighborhoods around a cell may be defined according to the coordinate system. The neighborhood size may be set according to a size value among any of the coordinates of the grid. Thus, the neighborhood around a cell may be determined by all the cells having coordinate values whose coordinate-wise difference with the coordinates of said are less than the neighborhood size.

The resolution of the grid of cells defines the level of detail over of the discretization. The resolution of the grid of cells is the size of the cells of a regular grid. For example, gaps of the model being smaller than the resolution of the grid may be ignored. The resolution of the grid may be defined by a user, thus controlling the level of detail of the discretization. The resolution of the grid may be automatically defined, e.g. by taking into account of the size of the smallest gaps of the modeled object.

Elements of the grid of cells may be grouped into collections of cells of the grid of a same category. Still in reference to the providing S10, the grid of cells comprises a first set of cells intersected by the modeled object and a second set of empty cells. Thus, the obtained grid of cells comprises two collections of cells of the grid of a same category. The grid of cells may comprise more one or more categories of cells.

A "set of cells" may be any data structure indicating one or more collections of cells of the grid of a same category. Thus, the method perform set operations on the first set of cells, the second set of cells, or any other set of cells category described by the method. A set of cells may be empty, that is no cell belongs to the set; a set of cells may comprise one or more cells.

Cells of the grid to be added to a set of cells are identified in the grid of cells, and once they are identified, they are added to the set of cells.

Elements of the first set of cells are cells intersected by the modeled object, that is, the volume of the grid intersects geometrically the modeled object on the space. For example, the intersection between a cell and the modeled object may consist of the intersection of at least one point of the modeled object and at least one point of a face of a cell. The second set of empty cells obtained by the discretization consists of the cells of the grid belonging to the complement (i.e., in set theoretic sense) of the first set of cells. Therefore, the cells belonging to the union of the two sets are all of the cells of the grid obtained via the providing S10.

Once the providing has been performed, *N* layers of cells adjacent to the modeled object are added. As previously discussed, *N* is a positive integer number that represents the number of layers to be added. Two sub-steps are performed. The first one concerns the adding of the *N-1* layers and the second one concerns the adding of the last layer, the *N*^{th} layer. The adding of the *N*^{th} layer is carried out only after the *N-1* layers have been added.

The adding of the *N-1* layers (e.g. a first layer is added for p=1, a second one for p=2, a third one for p=3...) can be contemplated as an iterative process where layers are added successively by performing for each layer what follows:
- identifying empty cells of the second set that are neighbors of intersected cells of the first set; and
- adding the identified cells of the second set to the set of cells of the first set.

Identified neighbor cells are to be understood as identified coordinate-wise neighbors on the grid. Thus, the method now associates empty cells surrounding the cells of the discrete object to new cells of the first set. As the method is performed successively, this is comparable to adding matter to the modeled object.

Therefore, the N-1 layers added in step S20 cover the modeled object. Notably, the N-1 layers can cover gaps of the modeled object of small size and thus removes unnecessary detail while preserving the design intent by the user. Indeed, the *N-1* added layers in the grid may fuse gaps existing in the grid of cell (represented as empty cells) if the "gap size", that is, the number of contiguous cells composing the gaps, is less than the *N-1* added layers. Thus, the number of layers determines the extent over which the envelope discards unnecessary details. In examples, a user sets the number *N* so that the added layers cover a determine gap-size, therefore reducing the complexity of the modeled object by covering gaps of size smaller than the gap-size, the details within the gaps not necessary to keep the within the design intent set by the gap-size. For example, the user may set how the method closes gaps by setting the number *N* as depending on the gap-size by setting *N=("gap size"*/*2)+ 1*.The number *N* may be set as well by automatically determining a gap size. In addition, the method preserve the non-convex regions of the modeled object, thanks to the adding being successively and starting from the discretized model object.

Once the N-1 layers have been added, the second sub-step of the adding S20 is performed, namely adding the *N*^{th} layer (the last added layer) by performing the identifying empty cells of the second set that are neighbors of intersected cells of the first set, and adding the identified empty cells of the second set to a third set of cells. Thus, the N^{th} layer is added by identifying empty cells of the grid according to the same principle that followed adding the previous layers. However, the identified empty cells are now added to a third set of cells, different from the first and second sets. The *N^{th}* layer is added by performing:
- identifying empty cells of the second set that are neighbors of intersected cells of the first set;
- adding the identified empty cells of the second set to a third set of cells.

The method next performs computing S30 one or more contiguous sets of cells of the third set. By "contiguous set", it is meant any set comprising adjacent cells in the grid, that is, the elements of the cell define a successive sequence of neighbor cells in the grid.

The method next identifies S40 one or more contiguous sets that enclose the discretized modeled object. By "enclose" it is meant that the sequence of neighbor cells composing the contiguous set forms a closed discrete shape that has in its interior cells of the first set; the cells of the first set comprising the cells intersecting the modeled object and the added matter by step S20. The closed shape may be determined via discrete boundary methods, verifying that the cells of the first set belong to the interior of the discrete boundary. By "keeping" it is meant that cells of the third set not forming a contiguous set enclosing the discretized modeled object are removed from the third set.

The method next performs reducing S50 the first set of cells. The adding of layers performed in step S20 is comparable to adding matter to the modeled object. A similar analogy is that the method so far has "heated" the modeled object and thus the modeled object is "dilated" with the added layers of matter. Step S50 of the method is thus comparable to "cooling" the discrete modeled object, by performing for each added *N-1* layers:
- identifying cells of the third set that are neighbor of cells of the first set;
- adding the cells of the first set having as neighbors the identified cells of the third set to the third set of cells.

Thus, the method successively adds the cells composing the added matter to the one or more contiguous sets that encloses the discretized modeled object, since only the cells composing said one or more contiguous sets have been kept.

Then, the method computes S60 the envelope of the modeled object based on the remaining cells of the grid belonging to the third set. By construction, the cells of the third set enclose the discretized modeled object. Notably, the method obtains envelopes that do not open gaps of the original model that where covered by adding the N-1 layers of step S20. Thus, the method computes envelopes that remove small details (i.e., the gaps covered by the added *N-1* layers) while still maintaining the design intent, i.e., the main geometric and topological features of the modeled object that maintain the use and purpose of the modeled object. Such envelope may thus be used during a design process for the review steps or after the design process for review or presentation purposes, wherein the process is quite interactive due to improved framerates thanks to the simplified geometry of the envelope. Indeed, the envelope renders less detail than the modeled object including, e.g., removal of interior geometry and less exterior detail, thanks to the added layers that covered the gaps in the model of size less than *N,* thereby improving ergonomics of the design process to the user.

In examples, identifying S40 the one or more contiguous sets that enclose the discretized modeled object further comprises determining whether one or more determined contiguous sets are enclosed by one or more other determined contiguous sets. Step S40 therefore determines if the cells composing each contiguous set are bounded by cells of other contiguous set, i.e., the cells of each contiguous set belong to the interior of the discrete boundary of the other enclosing contiguous set. The method may thus identify an outmost contiguous set which is not enclosed by any other contiguous set, that is, no other discrete shape of cells of the third set can be found that encloses said set. Inner contiguous sets are then any of the contiguous sets enclosed by the outmost contiguous set. The outmost contiguous set may thus define a candidate envelope, enclosing the modeled object with a closed shape. The candidate envelope may serve to provide a smooth envelope, as the closed shape has a closed topology.

In the event one or more contiguous sets are enclosed by one or more other contiguous sets, the cells of the enclosed contiguous sets are removed of cells of the third set and they are added to a fourth set of cells. Therefore, the method may identify matter added to the modeled object in step S20 that has extended into the interior of the modeled object. The method identifies inner geometry of the modeled object and inner geometry that may remain from the gaps that have been covered by the *N-1* layers in step S20. This is due to the fact that, by construction, the contiguous sets that have been added to the fourth set of cells are necessarily in between the cells representing the added matter, and empty cells of the second set; and that said contiguous sets are enclosed as well by an outmost contiguous set.

In examples, the set of contiguous sets belonging to the fourth set of cells computed in step S40 allows a refined cooling the modeled object; as the cooling may be set from the outmost contiguous set and the inner contiguous sets identifying the interior geometry. According to this example, the step of reducing S50 the first set of cells comprises, for each added N-1 layers:
- identifying cells of the third set that are neighbor of cells of the first set;
- adding the cells of the first set having as neighbors the identified cells of the third set to the third set of cells;
and further comprises:
- identifying cells of the fourth set that are neighbors of cells of the first set;
- adding the cells of the first set having as neighbors the identified cells of the fourth set to the fourth set of cells;

Therefore, the method verifies the neighbors of each cell in the layer to reduce. Any other cell of the first set that does not fulfill this condition is necessarily surrounded by cells of the first set only. To handle this case, step S50 further performs:
- for each cell of the first set having no identified cells of the fourth set or no identified cells of the third set as neighbor:
   ∘ determining cells enclosing the cell, thereby forming a neighborhood of cells;
   ∘ adding the cell to the third set of cells if any cell of the neighborhood of cells intersects a cell of the third set or the second set; or
   ∘ adding the cell to the fourth set of cells if no cell of the neighborhood of cells intersects a cell of the third set or the second set.

Thus, the method defines a neighborhood around each cell of the first set which is surrounded by the added matter. The neighborhood around a cell can be set by determining cells having coordinate values whose coordinate-wise difference with the coordinates of said are less than the neighborhood size. The method thus uses the defined neighborhoods to determine if the cell is to be added to the third set or the fourth set by verifying if the neighborhood intersects a cell of the third set or the fourth set. Thus, the method reduces the first set of layers with respect to the outer contiguous sets and the interior contiguous sets. This allows to compute an envelope that is less complex with respect with the modeled object, but while maintaining design intent. Indeed, by reducing the first set of layers with respect to the outer contiguous sets and the interior contiguous sets, the method does not open gaps that where covered by the added N-1 layers. Thus, the complexity of the envelope with respect to the modeled object is further reduced, while the envelope preserves the design intent. Consequently, less geometry needs to be rendered, further improving the ergonomics of a design process.

In examples, forming neighborhoods may be performed by tracing a plurality of rays starting from the cell of the first set and identifying cells of the added layer intersected by the rays. The added layer is one of the *N* layers added by step S20 comprising said cell of the first set. The cell from which rays are traced belong the said added layer. Rays may be computed on any direction, but only cells intersected by rays and belonging to the layer of the cell from which the rays are shot will be taken into account for forming the neighborhood. In other words, a traced ray stops if a cell is hit which is not part of the N-1 layer; rays pass only through cells of the added layer. By "tracing" it is meant that the method computes values of one or more line representations of a line the geometric space of the modeled object; starting from a point in space that intersects the cell of the first set and comprising a size and direction. Each of the one or more line representations may be traced in any direction, e.g., multiple independent directions, starting from the starting point and with any size. Any starting point may be defined, for example, the point of the geometric space corresponding to middle point of the cell or the like. The method may then form the neighborhood of cells based on the identified cells intersected by the rays. The intersection may be verify coordinate wise, first discretizing the ray and then verifying cells of the cells intersected by the discretization of the ray. Next, the method may form the neighborhood of cells (or a part of) with the identified cells intersected by the rays. Notably, the method may not need to trace every possible ray starting from the point . Indeed, the tracing may stop if any cell is hit (i.e., intersected by the ray) which is not part of the currently processed layer. Then, the method adds the cell to the third set of cells if the cell intersected by the ray is of the third set of cells or the fourth set of cells. or adds the cell to the fourth set of cells if that is not the case.

In examples, forming neighborhoods of the set may include adaptively changing the neighborhood size as the reducing S50 is performed for each of the added layers. For example, step S50 may initially set a neighborhood size I of size N and form neighborhoods of cells by tracing rays of said size. Step S50 may start with neighborhood size *I=N* at the layer *p* corresponding to *p=N-1.* The method may continue for each of the added layers *p=N-1, p=N-2* and so on, by decreasing the length of the traced rays accordingly, e.g., *I=N-1 for p=N-2* and so on. Other types of decreasing may be implemented that can improve the adaptive computation of neighborhoods. For example, the method may adaptively modify the neighborhood of cells via simulated annealing.

In examples, the method further comprises, before the computing of the envelope, performing a thinning of the cells of the third set that enclose the discretized modeled object. The thinning is performed by: identifying cells of the third set having for neighbors only cells that belong to the second or third sets of cells; and adding the identified cells to the second set of cells. The method thus only keeps cells of the envelop that are next to the empty space, i.e., the ensures that the envelope is a hull composed only of the outmost cells that enclose the modeled object. Therefore, the method avoids having multiple layers enveloping the discretized modeled object, thereby reducing computational load when rendering the modeled object. Thus, the method may yield a more detailed envelope that can be more easily rendered, thereby further improving ergonomics in design.

The method may further allow to work out details of the candidate envelope after the reducing step S50 and before the computation step S60, by pushing the candidate envelope into the interior space that was covered by the added matter. In examples, the method pushes the candidate envelope by penetrating the one or more contiguous sets of cells of the third set that enclose the discretized modeled object. This is performed by:
- identifying cells of the fourth set of cells that are neighbors of cells of the third set; and
- adding the identified cells of the fourth to the set third set of cells.

In other words, the method first identifies cells of the candidate envelope covering gaps. Indeed, due to the reducing step S50, the cells of the fourth set having a neighboring cells of the third set are necessarily those that are at the interior of the covered gaps. Next, the method pushes the envelope to the interior of the covered gaps,. The method thus outputs a more refined envelope, that shows relatively more detail of the gap, without losing the single closed shape of the candidate envelope.

The method may compute the envelope of the provided modeled object from the remaining cells of the third set. The method may ensure that the computed envelope does not contain any aberrations, like undesired intersections of the envelope with the modeled object. In examples, computing the envelope of the provided modeled object from the cells of the third set further comprises: identifying cells of the third set having for neighbor cells of the second set of cells, i.e., empty cells; and computing the envelope of the provided modeled object from the identified cells of the third set. Therefore, the method guarantees that the envelope does not intersect any cell of the first set, thus maintaining the design intent of the modeled object.

The method may be applied to compute envelopes of 2D modeled objects or 3D modeled objects. As a matter of fact, the method may be applied for any method known in the art that admits a discretization into grid of cells. For example, the provided modeled object may be a 2d geometry and the grid of cells may be a 2d grid, wherein neighbor cells are coordinate-wise neighbors in any of x or y directions. Therefore, the method may be implemented involving computations of coordinates of a grid of cells in Cartesian space. In other examples, the provided modeled object may be a 3d geometry and the grid of cells may be a grid of voxels, wherein neighbor cells are coordinate-wise neighbors in any of x, y or z directions. Therefore, the method may be implemented by performing computations of neighbors of a grid of cells in Euclidean space.

The method may thus output envelopes according to the input modeled object. The computed envelope may be a wrap consisting of a 3D mesh representation, or a bounding perimeter in 2D space. For example, if the provided modeled object is a 2d geometry represented by a bitmap and the grid of cells is a 2d grid, the envelope may be computed by converting the cells into a set of 2d lines. Similarly for 3D modeled objects, if the provided modeled object is a 3d geometry consisting of a mesh and the grid of cells is a grid of voxels, the envelope may be computed by converting the identified cells into a quadrilateral mesh.

In examples, when the provided modeled object that is a 3d geometry, the envelope of the provided modeled object may be computed by converting into a quadrilateral mesh the sides of each cells of the third set which are adjacent to cells of the second set. The method thus yields a single envelope mesh that wraps the input 3D geometry with a sphere-like topology, covering gaps in the model and capturing properly non-convex regions. The resulting wrap may be significantly accurate if the penetrating step is performed, as the wrap mesh is pushed into the interior of the gaps covered by the envelope. The envelope may be used to create impostor geometries by baking the texture of the modeled object. Notably, the method allows to obtain impostor geometries with well-defined textures, since envelope may be created so that there are no undefined regions for the texture content of the impostor.

It is now discussed an example of a data structure storing a grid of cells. The grid of cell represents the discretized modeled object. The data structure stores the grid of cells partitioned into equally sized sub-grids. All together the sub-grids covers the complete grid: each sub-grid covers a unique part of the grid and do not overlap. The data structure further comprises, for each sub-grid, one or more pointers to at least one of the first, second, third and fourth sets of cells discussed herein above.

The first, second, third and fourth sets of cells are split in several ones referring only to voxels of the same sub-grid. This decrease memory use for addressing a sub-grid. In order to illustrate that, a sub-volume (of a 3D grid) comprising 32 voxels for each dimension (x, y, z) of the sub-volume results into a total number of 32768 voxels per sub-volume of the 3D grid. Addressing the complete volume by (x, y, z)-coordinates may use three 32-bit integers (one per ordinate) or a 64-bit integer for a serialized index, i.e. z*(width*length)+y*width+x. The first, second, third and fourth sets of cells being split, the encoding of the pointers of the sub-volume to the cells listed in respective set of cell of the sub-volume can therefore not exceed a given size.

As already discussed, the method relies on (or uses) the state of neighbour cells when assigning a cell to one of the set of cells. Thus, the set of cells can refer to the cells by the (x,y,z)-vector of each cell; the (x,y,z)-vector of a cell represents the cell coordinate using the (x, y, z) dimension of the sub-volume.

The grid is split into equally-sized sub-cells of 32 cell for each the (x, y, z) dimension of the grid which results into a total number of 32768 voxels per sub-volume, similar to the former example. The (x,y,z)-position of a cell of a sub-grid is encoded into 15 bits; 15 bits is large enough for pointers to address the complete sub-grid. In an example, the 15 bits encoding are used as follows: 5 bits are reserved per ordinate, being understood that each ordinate of a sub-grid has range comprises between 0 and 31, also noted [0;31]. This allows to use a single 16-bit integer for referring to a cell instead of a triple of 16-bit integers. Even more memory is thus saved.

An implementation of the data structure for a sub-grid is now discussed. In this example, the sub-grid is a sub-volume of 32 voxels for each the (x, y, z) dimension of the sub-volume. The declaration struct defines a list of variables for a memory block under name SubVolume. Several variables are listed and can be accessed with a pointer.

```
 struct SubVolume {
   int8_t *voxelStatesPtr; //64-bit pointer to 8192 bytes for inhomogeneous voxel
 states of 32768 voxels
   int8_t homegeneousState; // one byte for the homogeneous state of the sub-
   volume
 }; // => 72 bytes per SubVolume
 int32_t volumeDim [3]; // number of voxels in each x-,y- and z-direction
 std::vector<SubVolume> semiSparseVoxelGrid;
```

The data structure has nine byte for a homogeneous sub-volume. A homogeneous sub-volume has only cells (voxels) that belong to a same set of cells. Therefore, no memory is allocated for the voxels as they all belong to the same set of cells. For a inhomogeneous sub-volume, additional 8192 bytes are dynamically allocated where each byte encodes four voxels of a same set of cells. An inhomogeneous sub-volume has cells (voxels) that belong to two or more set of cells.

When more and more layers are added during the heating steps, the new data structure is a magnitude more memory efficient since the former sparsely filled sub-volumes will be filled up and some of them will eventually become homogeneous - then requiring only 9 bytes.

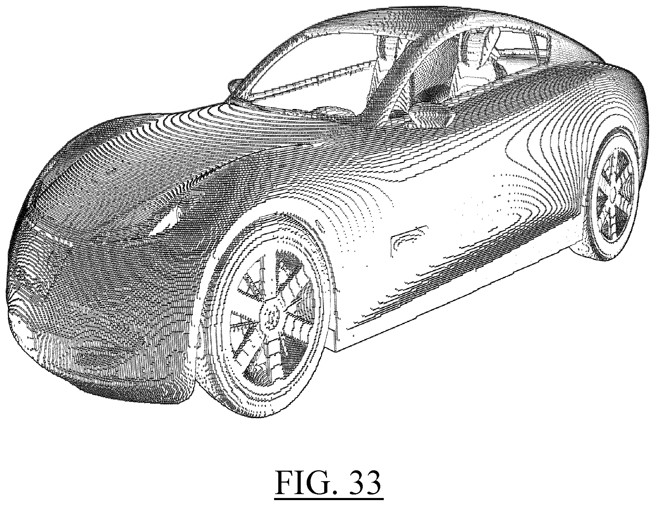

The data structure is at least ten times more memory efficient than traditional sparse voxel representations. The most memory efficient sparse voxel volume would be a map with a key of 64-bit integers (x,y,z)-vector encoded by 63 bits and one byte for the voxel state (that is, one byte for the identification of one of the four sets of voxels the voxel would belong to) which results in 9 bytes per occupied voxel. This means, that 1023 voxels would require the same amount of memory as one inhomogeneous sub-volume containing 32768 voxel states. For example, and referring now to the envelope of the car represented on FIG. 33, only for representing the 321 million geometry voxels the traditional data structure would require 24GB of memory. Additionally, there is a lot of time spent when accessing specific voxel states. Using a map means searching for a key each time the state of a voxel is accessed. In best case this happens in constant time but then there is an additional memory usage (std::map has a complexity of O(log(n)); std::unordered_map has a complexity of O(1) but requires more memory for internal hash table). The data structure of the invention occupies 289945 inhomogeneous sub-volumes of 8192 bytes for the geometry which is about 2.2GB of memory and the access of each voxel state takes constant time (O(1)).

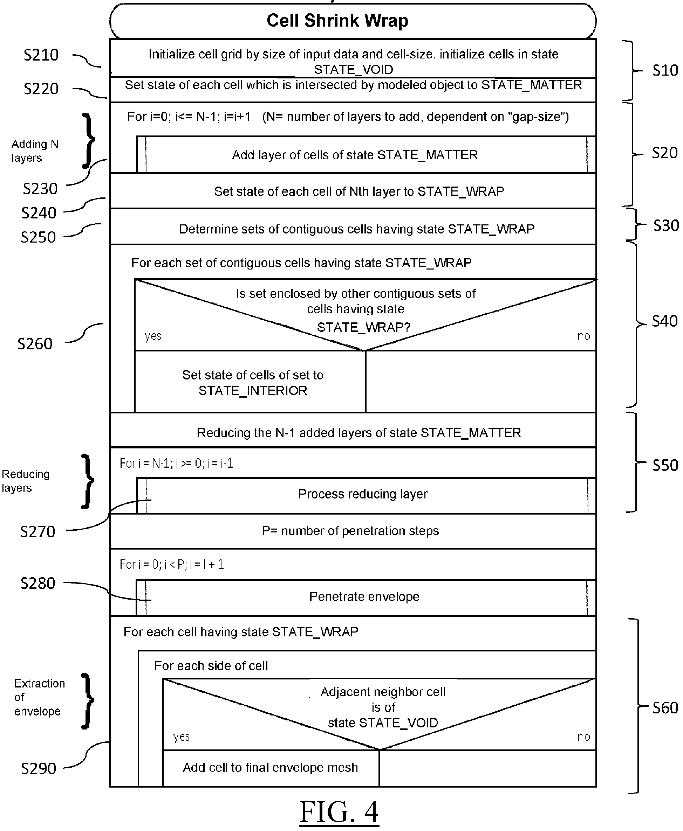

A combination of examples discussed hereinabove is discussed with reference to FIGS. 4-8. It is to be understood that this combination does not exclude other combination of the examples discussed hereinabove. FIGS. 4 to 8 are related to 3D modeled objects and a 3D grid, but which can be applied without significative structural modifications to a 2D modeled object and a 2D grid.

FIG. 4 shows the steps S10-S60 of the method discussed in reference to FIG. 1. In the discussion that follows, the term state will be used to refer to the set of cells a cell of the grid belongs to. The four states identifying each set are:
- STATE_MATTER for identifying the first set of cells;
- STATE_VOID for identifying the second set of cells;
- STATE_WRAP for identifying the third set of cells;
- STATE_INTERIOR for identifying the fourth set of cells.

Referring to FIG. 4, the step S10 comprises an initialization of the grid of cells S210 and the discretization step S220. As this example consist of a 3D modeled object, the grid of cells may be a grid of voxels. In step S210, the user first defines a grid of cells, specifying a parameter "cell-size" which implicitly defines the dimension of the cell grid for the complete modeled object. The user may also specify the dimension of the grid of cells in addition to the parameter cell-size. Alternatively, the user may only define specify the dimension of the grid of cells, with the "cell-size" parameter being set automatically. At step S210, all of the cells in the grid are initialized with STATE_VOID: all cells are thus empty.

In step 220, the modeled object is discretized by setting the state of each cell of the grid which is intersected by the geometry of the modeled object to STATE_MATTER.

As a result of S210 and S220, each cell of the grid is associated with one state selected among STATE_VOID, corresponding to the second set of cells and STATE_MATTER, corresponding to the first set of cells.

Next, N layers are added to the modeled object in step S20. The successive additions of adjacent layers simulates a heating process where the matter of the modeled object expands as a result of an increase of the temperature of its matter. The successive additions start from the cells of the discretized modeled object. The successive additions of adjacent layers stops after *N* layers have been added. Two successive layers are adjacent, each cell of a *N-p* layer share a common edge of a 2D geometrical element or a common face of 3D geometrical element with at least one geometrical element of the layer *N-(p+1).* The user may specify beforehand a parameter "gap-size", determining the extent of gaps which should be closed by the envelope, as the number of added layers N being set as *N = ("gap-size"*/*2J + 1*. If a gap of the modeled object has been closed by the added layers, the matter is "melted" and will not be pulled apart during the reducing step.

Still referring to FIG. 4, the step S20 of adding S20 N layers adjacent to the modeled object, simulating the heating process, comprises: adding successively N-1 adjacent layers of matter in step S230 followed by adding an *N^{th}* layer of composed of wrap cells in step S240. In step S230, matter (i.e., cells of the state STATE_MATTER) is added to the modeled object by adding a corresponding adjacent layers of cells (adjacent in any of x-,y- (or z)-directions) to each cell having state STATE_MATTER. The x-, y- directions are those of a 2D grid; the x-,y- and z- direction are those of the 3D grid. Step S230 is performed *N-1* successive times.

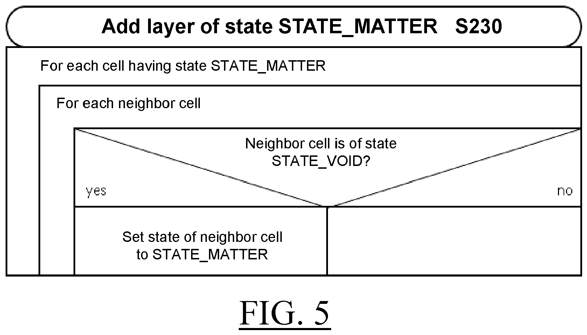

FIG. 5 further details Step S230. For each cell with a state matter, it is determined if each of its neighbor is an empty cell or not. If No, the state of the neighbor cell is kept unchanged (that is, the neighbor keeps its state STATE_VOID). If the Yes, the state of the neighbor cell is changed for a state STATE_MATTER.

After performing S230 *N-1* times, step S240 adds the *N^{th}* layer according to the same principle of Step S240. For each cell with a STATE_MATTER, it is determined if each of its neighbor is an empty cell or not. If No, the state of the neighbor cell is kept unchanged (that is, the neighbor keeps its state STATE_MATTER). If Yes, the state of the neighbor cell is changed for a state STATE_WRAP. The cells having state STATE_WRAP are the cells that form a first approximation of the future envelope that will wraps the input 3D geometry. Since the matter has been extended into the interior of the modeled object (in fact, any direction), there may exist cells forming envelopes enclosed by other formed envelopes.

To address this, steps S30 and S40 are performed next. Essentially, Step S30 first determine candidate envelopes and next Step S40 removes any candidate envelope that is enclosed by other candidate envelopes, thereby only leaving the outer envelope(s) of the modeled object.

FIG. 4 further details step S30, determining S250 sets of contiguous cells having state STATE_WRAP. Step S30 determines sets whose elements are adjacent cells in the grid, that is, the elements of the set share common edges (for a 2 grid) or faces (for a 3D grid). The sets of contiguous cells may be considered as candidate envelopes. As matter has been extended in all directions, cells having STATE_WRAP state thus form one or several contiguous set of cells, including sets of contiguous cells being enclosed by other determined contiguous sets.

Next, Fig. 4 details step S40. The sets of contiguous cells enclosed by outer sets of contiguous cells are removed by performing step S260 for each set of contiguous cells having state STATE_WRAP. Step S260 determines if the set is enclosed by other contiguous set of cells having state STATE_WRAP. The determination may be performed by constructing polygons formed by the cells of the contiguous sets and then performing polygonal bounding detection on the 2D grid, or similarly constructing polyhedrons on a 3D grid, or any similar method. If it is determined that the set is enclosed by other contiguous set, then the state of the cells of the set are set to STATE INTERIOR.

As step S40 performs step S260 for each set of contiguous cells having state STATE_WRAP, only the outmost sets of contiguous cells are left, thereby forming the candidate envelopes. Each candidate envelope is topologically closed .

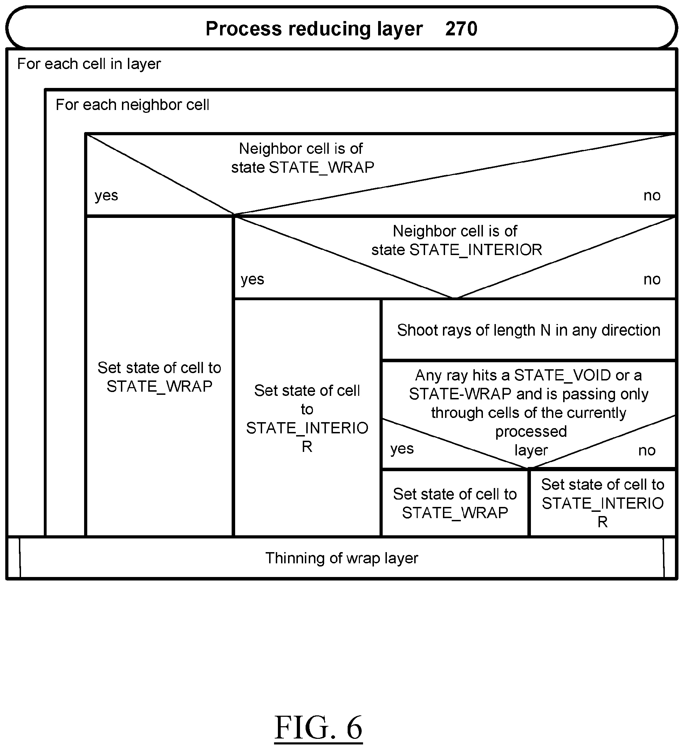

Next, step S50 is carried out, detailed in FIG. 4. The successive reduction of the N-1 layers of added matter simulates a cooling process where the previously expanded modeled object is now contracted. Step S50 starts from the *N-1* added layer, and step S270 is performed on the corresponding *i*-layer to be removed, i being a positive integer starting from *i=N-1* and decreasing successively (i.e., *i=N-2, i=N-3* and so on) until reaching *i=0*. Referring to FIG. 4, step S50 performs, a process S270 to be carried for each corresponding *i-th* layer to be removed. The process S270 is detailed in FIG. 6. The process for reducing layer 270 is performed by checking the states of the neighborhood of each cell in the corresponding layer to remove. It first checks each neighbor cell (which is not part of the current layer) for each cell of the corresponding layer to remove. If such a neighbor cell is of STATE_WRAP then the state of the processed cell is set as STATE_WRAP. If such a neighbor cell is of STATE_INTERIOR then the state of the processed cell is set to STATE_INTERIOR. Otherwise, the cell must be surrounded either by cells having state STATE_MATTER or by cells of the corresponding layer to remove . In that case, a ray, starting from the processed cell is shot in all directions. The tracing of a ray stops, if a cell is hit which is not part of the corresponding layer to remove. If any ray hits (i.e., intersects) a cell which has STATE_VOID or STATE_WRAP, then the processed cell is set to STATE_WRAP. Otherwise it is set to STATE_INTERIOR. This test is necessary to not open gaps which have been melted in the heating step.

At the end of the reducing step, there may be multiple layers of cells having STATE_WRAP, including those of the outmost set of contiguous sets that where determined in step S40. FIG. 4 describes a penetration process followed by a thinning process, performed after step S50 and before the computation of the envelope of step S60, that allow to thin the envelope and work out some details prior to computing the envelope. The process is described hereunder.

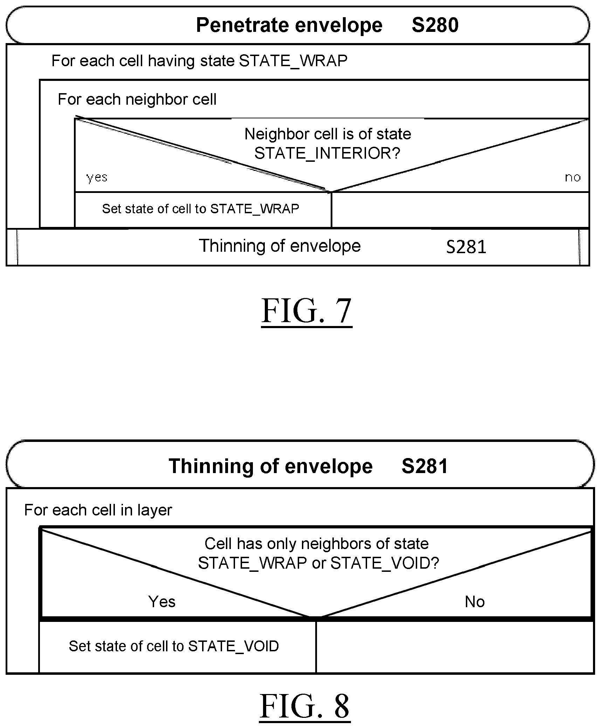

With reference to FIG. 4, after step S270 it is obtained a parameter *P,* called "penetration-depth". The parameter *P* must be a positive integer. The number P sets a number of iterations that are to be performed. Step S280 is thus performed *P* times, and may be iterated with an index *i,* starting from 0 and increasing successively (i.e., *i=0, i=1, i=2,* and so on) until reaching the positive integer prior to *P.* Step S280 consists of penetration process followed by a thinning process, and it is described in FIGs. 7 and 8. The penetration process is optional and the thinning process may be implemented independently. However, in this example, the process S280 first performs the penetration process followed by a thinning process of Step S281.

The penetration process of step S280 is described in FIG. 7. Step S280 essentially "pushes" the cells having state STATE_WRAP into the "interior space" composed by cells having state STATE_INTERIOR via the parameter *P,* therefore, Step S280 allows for working out some details of the candidate envelope. Referring to FIG. 7, step S280 verifies each neighbor cell of each cell having state STATE_WRAP. If the neighbor cell is of state STATE_INTERIOR, then the neighbor cell is set to STATE_WRAP. Else, the state of the neighbor cell is unchanged. Next, Step S281 is performed.

The thinning process of step S281 is now described in FIG. 8. The thinning process essentially discards double (or multiple) layers of cells of state STATE_WRAP. It performs, for each cell in the layers of cells having state STATE_WRAP, verifying if the cell has only neighbors of state STATE_WRAP or STATE_VOID, and adding the state of the cell to STATE_VOID if that is the case, keeping the state unchanged otherwise.

Next, step S60 is performed. Fig. 4 details step S60, by performing an extraction of the envelope described by the process S290.

The method performs, for each of the remaining cells having state STATE_WRAP, verifying each side of the cell (e.g., an edge of the cell in the 2D grid, or the side of a voxel in a 3D grid) and verifying if the neighboring cell is a cell having state STATE_VOID. If that is the case, the cell is added to the final envelope that is to be computed. This is performed for all of the remaining cells having state STATE_WRAP. This guarantees that the wrap-mesh is not intersecting any STATE_MATTER cell. Then step S60 converts the added cells into an envelope, e.g., a quadrilateral mesh.

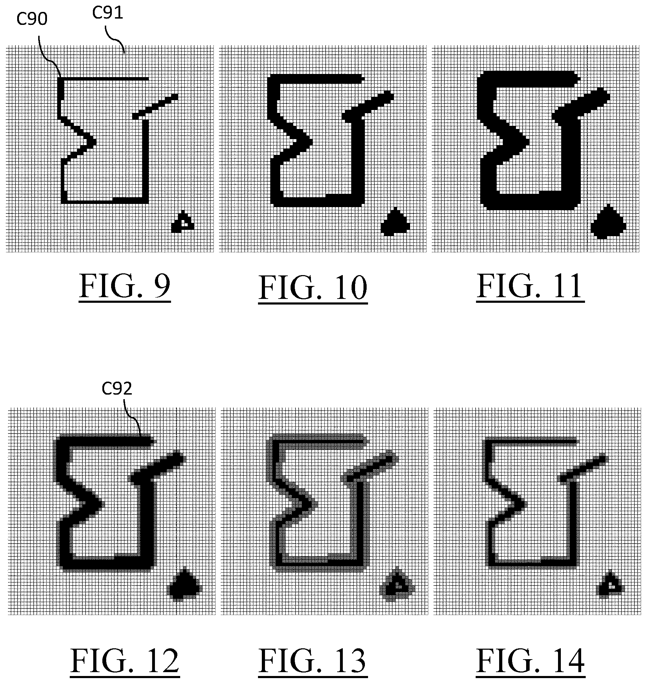

FIGs. 9 to 14 illustrate the steps for computing an envelope of a 2D modeled object with a 2D grid, wherein thinning is performed prior to the computation of the envelope. The grid has been initialized with *"gap-size" = 1*, the number of added layers (heating steps) N is set to 2, and the number of reducing steps being thus *N-*1= 1. FIG. 9 shows step S10, with an initial 2D model discretized in the grid of cells. FIG. 9 shows the cells of the first set in black color C90 and cells of the second cell of empty cells are shown in white color C91. FIGs. 10-11 show two added layers *p=1* and *p=2* according to step S20. The added layers of cells of the first set are shown in black, showing the added matter, in all directions, from the modeled object. Fig 10 thus shows added layer *p=1.* Fig. 11 shows the subsequently added layer *p=2.* The cells of the layer added at *p=2=N* are thus cells of the third set. FIG. 12 shows the contiguous sets determined in step S30 and S40, the contiguous sets are shown in dark grey color C92. FIG. 13 shows the reducing step S50; the dark gray cells illustrate the "cooling" process achieved by step S50. Fig. 14 shows that the outer dark gray scales have been removed after performing the thinning step. The step S60 is not shown in the image.

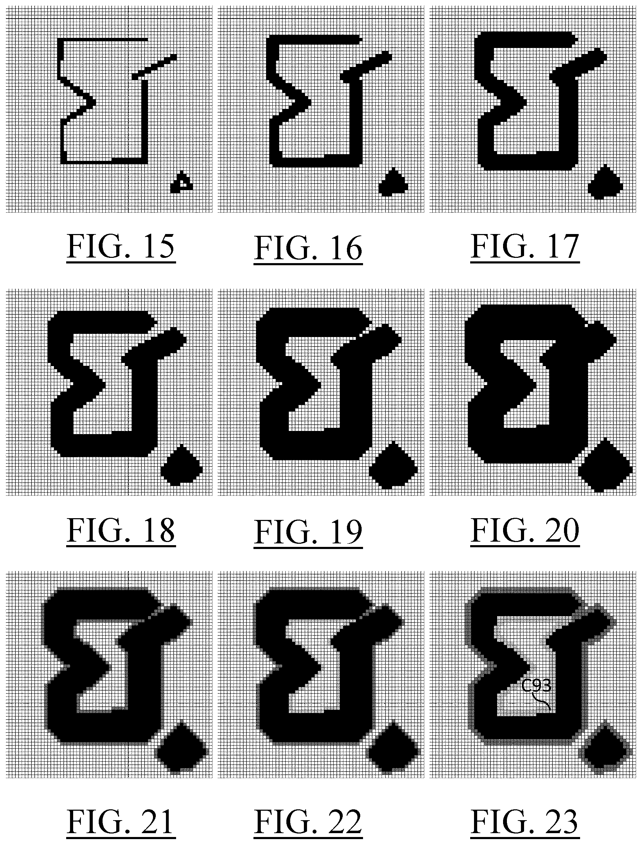

One notices that the one or more contiguous sets that enclose the discretized modeled object (the cells having STATE_WRAP states and represented in dark grey) do not enclose any other contiguous sets. The next example illustrated with FIGs. 15 to 32 shows a case where one or more contiguous sets are enclosed by one or more other determined contiguous sets.

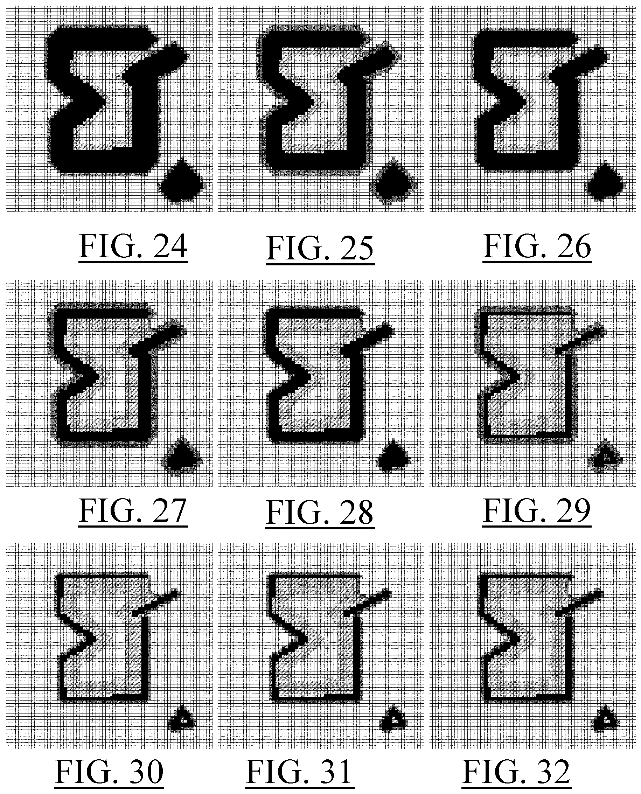

Furthermore, the example illustrated on FIGs. 15 to 32 illustrate the computation of an envelope by including a penetration step, and wherein each iteration of the reducing step S50 is followed by thinning process, prior to performing the penetration process. In this example, the grid has been initialized with gap-size = 2 the number of heating steps being *N=* 5, the number of annealing steps being *N-1=* 4, and the penetration parameter *P=2.* The example uses the same colors black C90, white C91, dark grey C92 used for indicating the different sets of cells as in the previous example. Additionally, interior cells (i.e., cells of the fourth set of cells) are identified in light gray C93. FIG. 15 shows step S10, the initial model being discretized in the voxel grid. FIGs. 16-20 show the successive addition of layers of black cells (added matter) by step S20. FIG. 21 shows the determined sets of contiguous sets the third set of cells by step S30 in dark gray. Fig. 22 shows the identified sets of contiguous cells enclosing the modeled object, keeping the outer contiguous sets in dark gray, and adding the enclosed contiguous sets in light gray. FIGs. 23-30 show each step of the reducing S50, wherein each iteration of the reducing step S50 is followed by a thinning process. FIG. 23 shows the first iteration of the reducing, showing how the matter is cooled by one layer. There is therefore a double layer of dark grey cells. FIG. 24 shows the thinning process applied after the first iteration of the reducing step S50, wherein the cells of the outmost layer have been set as an empty cells. This is due to the thinning identifying dark grey cells (cells of the third set) having for neighbors only sets belonging to the second or third set of cells (i.e., empty cells or other dark grey cells). The cells of the outmost layer are precisely those that satisfy this condition. The same process is repeated for FIG. 25-30. FIG. 29 further illustrates the reducing step performing the shooting of rays in the model. At the lower right, the reducing leaves the interior cells of the model. Furthermore, the gap that is present in the upper right corner of the left model is not opened after the thinning in FIG. 30. FIGs. 31 and 32 show the penetration steps *q=1* and *q=2* of the penetration process, given the penetration parameter *P=2.* Both of the figures show that the dark gray layer pushes into the interior space of the gap. Notably, the resulting envelope is relatively more detailed, while maintaining a sphere-like topology.

FIGs. 33-35 show an example of an envelope of a model of a vehicle computed according to the method. In this example, the method uses a voxel grid with a voxel size of 6mm. FIG. 33 shows the resulting envelope. The envelope consists of about 1.1 million voxels, not including the interior geometry of the motor or the like. Changing the voxel size changes the resolution of the model and as well the storage needs. A voxel size of 0.5mm yields to more than 150 billion voxels for the discretized model and the resulting envelope (not shown here) consists of about 4.5 billion voxels. A voxel size of 0.33mm requires a volume of about 600 billion voxels and results in an envelope consisting of 16 billion voxels Notably, the method and the data structure allow to implement the method in current commercial computers. The envelope based on the grid of voxel size of 0.33mm was computed on a computer with 64GB of RAM; while the envelope computed based on the grid of voxel size of 0.5mm was computed with a laptop with 32GB of RAM.

Compared to the data structure used in the implementation, traditional structures require about 24GB of memory for storing the 321 million geometry voxels of the discretized vehicle. This is in addition to the time spent when accessing specific voxel states. The time spent accessing specific voxel states, and/or performing operations in the voxel states may require important computational resources. Indeed, operations like using a map e.g., std::map, means that a key has to be searched each time the state of a voxel is accessed. In a best case scenario this happens in constant time but then there is an additional memory usage. For instance, the operation std::map has a complexity of O(log(n)) whereas the operation std::unordered_map has a complexity of O(1) but requires more memory for internal hash table. In contrast, the provided data structure occupies 289945 inhomogeneous sub-volumes of 8192 bytes for the geometry which is about 2.2GB of memory; to access each voxel state, a constant time (O(1)) is needed. Therefore, the data storage needs are significantly reduced and access time significantly improved.

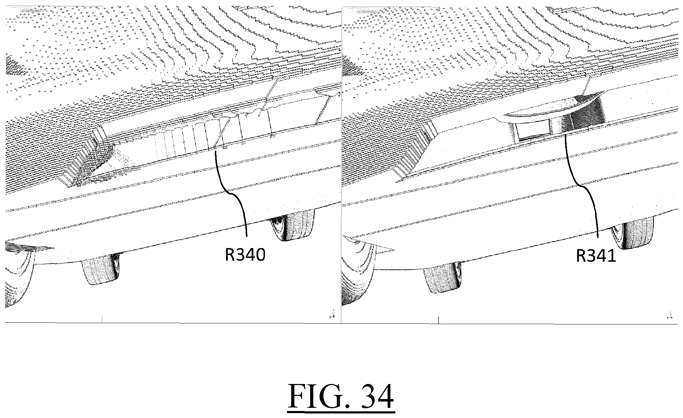

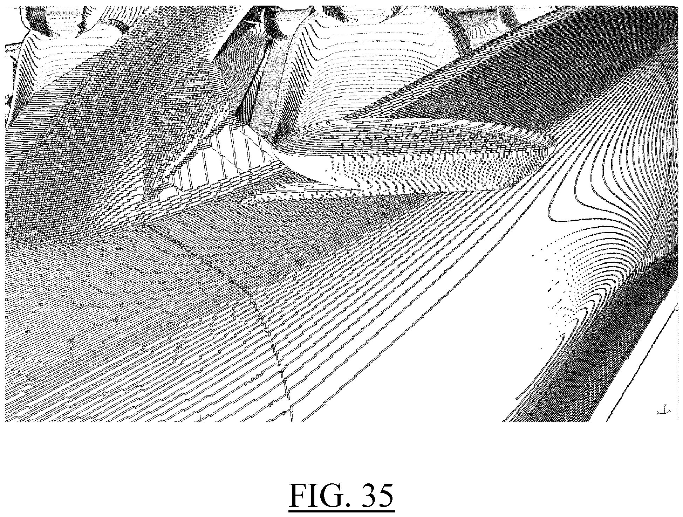

Invisible geometry, like geometry of the motor, has been discarded by the method by setting a gap size so that the added layers in step S20 of the method closes the gaps that access the geometry of the motor. FIG.34 shows a comparison of gaps closed by the envelope according to the set gap-size. On the left side, the big opening indicated in R340 has been closed by the envelope by choosing a large gap size. In contrast, on the right side, the parameter has been chosen to close only small gaps, so the envelope passes through the opening R341 and envelopes as well the geometry of the motor (not shown). FIG. 35 shows a zoomed region of the envelope of FIG. 33. It illustrates how the envelope respects the detail of non-convex regions, like the mirror and its handle.

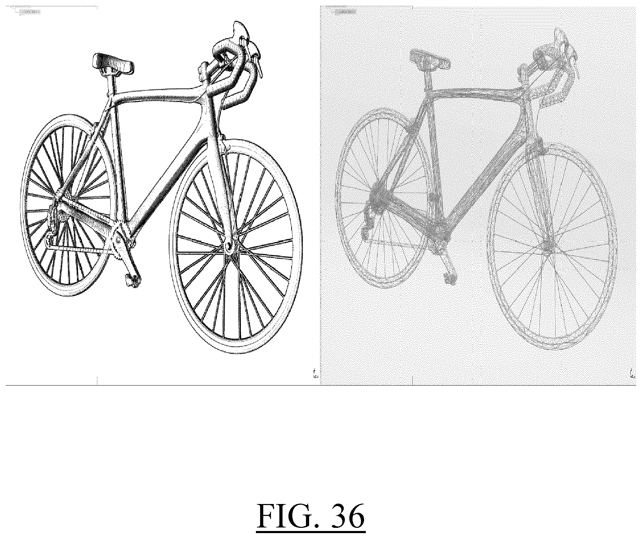

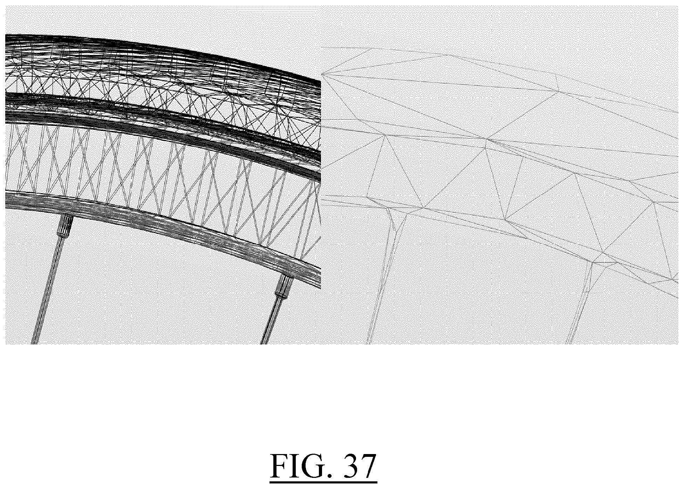

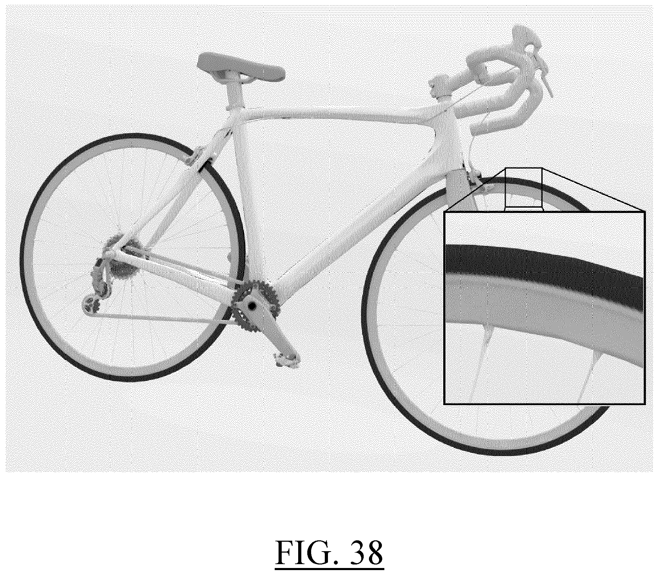

FIGs. 36-38 show an example of an envelope computed from a 3D model of a bicycle. FIG. 36 shows the original model on the left while the envelope is shown on the right. The original model in the right consists of about 1.3 million triangles whereas the computed envelope is a single mesh consisting of about 32 thousand triangles. FIG. 36 further shows how the envelope computed by the method respects design intent of the bicycle, while providing an accurate enough simplified model. Indeed, the model can be considered an extreme example of an object that contains multiple holes that need to be respected; the holes consist of the empty space set by the rays that form the wheels. The envelope of the left side is a single envelope that wraps individually each of the rays of the wheels of the bike. FIG. 37 shows a zoomed region of the wheels of both models, and showing how each ray of the wheel is represented in the mesh of the envelope. FIG. 38 shows an impostor geometry generated from the envelope; a texture of the original model has been applied. Notably, while the impostor geometry is a coarser geometry than the original model, the applied texture covers the individual rays of the bicycle, without any texture aberrations.

FIGs. 9 to 14 illustrate the steps for computing an envelope of a 2D modeled object with a 2D grid, wherein thinning is performed prior to the computation of the envelope. The grid has been initialized with *"gap-size" = 1*, the number of added layers (heating steps) *N* is set to 2, and the number of reducing steps being thus *N*-1= 1. FIG. 9 shows step S10, with an initial 2D model discretized in the grid of cells. FIG. 9 shows the cells of the first set in black color C90 and cells of the second cell of empty cells are shown in white color C91. FIGs. 10-11 show two added layers *p=1* and *p=2* according to step S20. The added layers of cells of the first set are shown in black, showing the added matter, in all directions, from the modeled object. Fig 10 thus shows added layer *p=1.* Fig. 11 shows the subsequently added layer *p=2.* The cells of the layer added at *p=2=N* are thus cells of the third set. FIG. 12 shows the contiguous sets determined in step S30 and S40, the contiguous sets are shown in dark grey color C92. FIG. 13 shows the reducing step S50; the dark gray cells illustrate the "cooling" process achieved by step S50. Fig. 14 shows that the outer dark gray scales have been removed after performing the thinning step. The step S60 is not shown in the image.

One notices that the one or more contiguous sets that enclose the discretized modeled object (the cells having STATE_WRAP states and represented in dark grey) do not enclose any other contiguous sets. The next example illustrated with FIGs. 15 to 32 shows a case where one or more contiguous sets are enclosed by one or more other determined contiguous sets.

Furthermore, the example illustrated on FIGs. 15 to 32 illustrate the computation of an envelope by including a penetration step, and wherein each iteration of the reducing step S50 is followed by thinning process, prior to performing the penetration process. In this example, the grid has been initialized with gap-size = 2 the number of heating steps being *N=* 5, the number of annealing steps being *N-1=* 4, and the penetration parameter *P=2.* The example uses the same colors black C90, white C91, dark grey C92 used for indicating the different sets of cells as in the previous example. Additionally, interior cells (i.e., cells of the fourth set of cells) are identified in light gray C93. FIG. 15 shows step S10, the initial model being discretized in the voxel grid. FIGs. 16-20 show the successive addition of layers of black cells (added matter) by step S20. FIG. 21 shows the determined sets of contiguous sets the third set of cells by step S30 in dark gray. Fig. 22 shows the identified sets of contiguous cells enclosing the modeled object, keeping the outer contiguous sets in dark gray, and adding the enclosed contiguous sets in light gray. FIGs. 23-30 show each step of the reducing S50, wherein each iteration of the reducing step S50 is followed by a thinning process. FIG. 23 shows the first iteration of the reducing, showing how the matter is cooled by one layer. There is therefore a double layer of dark grey cells. FIG. 24 shows the thinning process applied after the first iteration of the reducing step S50, wherein the cells of the outmost layer have been set as an empty cells. This is due to the thinning identifying dark grey cells (cells of the third set) having for neighbors only sets belonging to the second or third set of cells (i.e., empty cells or other dark grey cells). The cells of the outmost layer are precisely those that satisfy this condition. The same process is repeated for FIG. 25-30. FIG. 29 further illustrates the reducing step performing the shooting of rays in the model. At the lower right, the reducing leaves the interior cells of the model. Furthermore, the gap that is present in the upper right corner of the left model is not opened after the thinning in FIG. 30. FIGs. 31 and 32 show the penetration steps *q=1* and *q=2* of the penetration process, given the penetration parameter *P=2.* Both of the figures show that the dark gray layer pushes into the interior space of the gap. Notably, the resulting envelope is relatively more detailed, while maintaining a sphere-like topology.

FIGs. 33-35 show an example of an envelope of a model of a vehicle computed according to the method. In this example, the method uses a voxel grid with a voxel size of 6mm. FIG. 33 shows the resulting envelope. The envelope consists of about 1.1 million voxels, not including the interior geometry of the motor or the like. Changing the voxel size changes the resolution of the model and as well the storage needs. A voxel size of 0.5mm yields to more than 150 billion voxels for the discretized model and the resulting envelope (not shown here) consists of about 4.5 billion voxels. A voxel size of 0.33mm requires a volume of about 600 billion voxels and results in an envelope consisting of 16 billion voxels Notably, the method and the data structure allow to implement the method in current commercial computers. The envelope based on the grid of voxel size of 0.33mm was computed on a computer with 64GB of RAM; while the envelope computed based on the grid of voxel size of 0.5mm was computed with a laptop with 32GB of RAM.

Compared to the data structure used in the implementation, traditional structures require about 24GB of memory for storing the 321 million geometry voxels of the discretized vehicle. This is in addition to the time spent when accessing specific voxel states. The time spent accessing specific voxel states, and/or performing operations in the voxel states may require important computational resources. Indeed, operations like using a map e.g., std::map, means that a key has to be searched each time the state of a voxel is accessed. In a best case scenario this happens in constant time but then there is an additional memory usage. For instance, the operation std::map has a complexity of O(log(n)) whereas the operation std::unordered_map has a complexity of O(1) but requires more memory for internal hash table. In contrast, the provided data structure occupies 289945 inhomogeneous sub-volumes of 8192 bytes for the geometry which is about 2.2GB of memory; to access each voxel state, a constant time (O(1)) is needed. Therefore, the data storage needs are significantly reduced and access time significantly improved.

Invisible geometry, like geometry of the motor, has been discarded by the method by setting a gap size so that the added layers in step S20 of the method closes the gaps that access the geometry of the motor. FIG.34 shows a comparison of gaps closed by the envelope according to the set gap-size. On the left side, the big opening indicated in R340 has been closed by the envelope by choosing a large gap size. In contrast, on the right side, the parameter has been chosen to close only small gaps, so the envelope passes through the opening R341 and envelopes as well the geometry of the motor (not shown). FIG. 35 shows a zoomed region of the envelope of FIG. 33. It illustrates how the envelope respects the detail of non-convex regions, like the mirror and its handle.

FIGs. 36-38 show an example of an envelope computed from a 3D model of a bicycle. FIG. 36 shows the original model on the left while the envelope is shown on the right. The original model in the right consists of about 1.3 million triangles whereas the computed envelope is a single mesh consisting of about 32 thousand triangles. FIG. 36 further shows how the envelope computed by the method respects design intent of the bicycle, while providing an accurate enough simplified model. Indeed, the model can be considered an extreme example of an object that contains multiple holes that need to be respected; the holes consist of the empty space set by the rays that form the wheels. The envelope of the left side is a single envelope that wraps individually each of the rays of the wheels of the bike. FIG. 37 shows a zoomed region of the wheels of both models, and showing how each ray of the wheel is represented in the mesh of the envelope. FIG. 38 shows an impostor geometry generated from the envelope; a texture of the original model has been applied. Notably, while the impostor geometry is a coarser geometry than the original model, the applied texture covers the individual rays of the bicycle, without any texture aberrations.

## Claims

1. A computer-implemented method for designing an envelope of a modeled object, the method comprising:
• providing (S10) a modeled object that is discretized into a grid of cells, thereby obtaining a grid comprising a first set of cells intersected by the modeled object and a second set of empty cells, two cells of the grid being neighbors if at least one of the coordinates of one cell is a successor or predecessor of the coordinates of the other cell;
• adding (S20) *N* layers adjacent to the modeled object, N being a positive integer number defined as N=("gap-size"/2)+1, where "gap-size" is a provided value, by:
∘ adding *N* -1 layers by performing for each layer:
- identifying empty cells of the second set that are neighbors of intersected cells of the first set;
- adding the identified cells of the second set to the set of cells of the first set;
∘ adding an *N*^{th} layer by performing:
- identifying empty cells of the second set that are neighbors of intersected cells of the first set;
- adding the identified empty cells of the second set to a third set of cells;
• computing (S30) one or more contiguous sets of cells of the third set;
• identifying (S40) one or more contiguous sets that enclose the discretized modeled object and keeping in the third set only cells of the said identifying one or more contiguous sets wherein identifying the one or more contiguous sets that enclose the discretized modeled object further comprises:
∘ determining whether one or more determined contiguous sets are enclosed by one or more other determined contiguous sets;
∘ if one or more determined contiguous sets are enclosed by one or more other determined contiguous sets, removing the cells of the enclosed contiguous sets of cells of the third set by adding the cells of the determined contiguous sets of cells to a fourth set of cells;
• reducing (S50) the first set of cells, by performing for each added N-1 layers:
∘ identifying cells of the third set that are neighbor of cells of the first set;
∘ adding the cells of the first set having as neighbors the identified cells of the third set to the third set of cells; and
• computing (S60) the envelope of the provided modeled object from the cells of the third set;
the method further comprising, storing the grid of cells into a data structure, splitting the first, second, third and fourth set of cells into several ones referring only to voxels of the same sub-grid, splitting the grid of cells into equally-sized sub-cells of 32 cells for each [x,y,z] dimension of the grid, and encoding the [x,y,z] position of a cell of a sub-grid into 15 bits, wherein 5 bits are reserved per ordinate; and
the data structure having 9 bytes for a homogeneous sub-volume, the homogeneous sub-volume having only cells belonging to a same set of cells among the first, second, third or fourth sets of cells, the data structure having 8192 bytes being dynamically allocated for an inhomogeneous sub-volume, each byte encoding four cells of a same set of cells, the inhomogeneous sub-volume having cells belonging to two or more set of cells among the first, second, third and/or fourth sets of cells.

2. The computer-implemented method according to claim 1, wherein the reducing the first set of cells further comprises, for each added N -1 layers:
• identifying cells of the fourth set that are neighbors of cells of the first set;
• adding the cells of the first set having as neighbors the identified cells of the fourth set to the fourth set of cells;
• for each cell of the first set having no identified cells of the fourth set or no identified cells of the third set as neighbor:
∘ determining cells enclosing the cell, thereby forming a neighborhood of cells;
∘ adding the cell to the third set of cells if any cell of the neighborhood of cells intersects a cell of the third set or the second set; or
∘ adding the cell to the fourth set of cells if no cell of the neighborhood of cells intersects a cell of the third set or the second set.

3. The computer-implemented method according to claim 2, wherein the determining cells enclosing the cell comprises:
• tracing a plurality of rays starting from the cell of the first set;
• identifying cells of the said added N-1 layer intersected by the rays;
• forming the neighborhood of cells with the identified cells intersected by the rays.

4. The computer-implemented method according to claim 3, wherein the rays are traced with a length that decreases for each of the reducing of the first set of cells, the initial length of the rays being of *N* cells.

5. The computer-implemented method according to any of claims 1 to 4, further comprising, before the computing of the envelope, performing a thinning of the cells of the third set that enclose the discretized modeled object by:
• identifying cells of the third set having for neighbors only cells that belong to the second or third sets of cells;
• adding the identified cells to the second set of cells.

6. The computer-implemented method of any of claims 1 to 5, further comprising, before the computing of the envelope:
• penetrating the one or more contiguous sets of cells of the third set that enclose the discretized modeled object by:
∘ identifying cells of the fourth set of cells that are neighbors of cells of the third set;
∘ adding the identified cells of the fourth to the set third set of cells.

7. The computer-implemented method according to any of claims 1 to 6, wherein the computing the envelope of the provided modeled object from the cells of the third set further comprises:
• identifying cells of the third set having for neighbor cells of the second set of cells;
• computing the envelope of the provided modeled object from the identified cells of the third set.

8. The computer-implemented method according to any of claims 1 to 7, wherein:
• the provided modeled object is a 2d geometry and the grid of cells is a 2d grid, wherein neighbor cells are coordinate-wise neighbors in any of x or y directions; or
• the provided modeled object is a 3d geometry and the grid of cells is a grid of voxels, wherein neighbor cells are coordinate-wise neighbors in any of x, y or z directions.

9. The computer-implemented method according to claim 8, wherein computing the envelope of the provided modeled object from the identified cells of the third set further comprises:
• if the provided modeled object is a 2d geometry represented by 2D vector graphics and the grid of cells is a 2d grid, the envelope is computed by converting the cells into a set of 2d lines; or
• if the provided modeled object is a 3d geometry consisting of a mesh and the grid of cells is a grid of voxels, the envelope is computed by converting the identified cells into a quadrilateral mesh.

10. The computer-implemented method according to claim 9, wherein when the provided modeled object that is a 3d geometry, the envelope of the provided modeled object is computed by converting into a quadrilateral mesh the sides of each cells of the third set which are adjacent to cells of the second set.

11. A data structure storing a grid of cells, the data structure partitioning the grid of cells into equally sized sub-grids, each sub-grid including pointers to at least one of the first, second, third and fourth sets of cells of the method of anyone of claims 2 to 10.

12. A computer program comprising instructions for performing the method according to any of claims 1 to 10.

13. A computer readable storage medium having recorded thereon a computer program according to claim 12.

14. A system comprising a processor coupled to a memory and a graphical user interface, the memory having recorded thereon the computer program according to claim 12.

## Patentansprüche

1. Computer-implementiertes Verfahren zum Entwerfen einer Umhüllung eines modellierten Gegenstands, wobei das Verfahren Folgendes umfasst:
• Bereitstellen (S10) eines modellierten Gegenstands, der in ein Raster von Zellen diskretisiert ist, wodurch ein Raster erhalten wird, das einen ersten Satz von Zellen, der von dem modellierten Gegenstand geschnitten wird, und einen zweiten Satz von leeren Zellen umfasst, wobei zwei Zellen des Rasters benachbart sind, wenn mindestens eine der Koordinaten einer Zelle ein Nachfolger oder Vorläufer der Koordinaten der anderen Zelle ist;
• Hinzufügen (S20) von *N* Schichten angrenzend an den modellierten Gegenstand, wobei N eine positive ganze Zahl ist, definiert als N=("Spaltgröße"/2)+1, wobei "Spaltgröße" ein bereitgestellter Wert ist, durch
∘ Hinzufügen von *N* -1 Schichten durch Durchführen für jede Schicht von Folgendem:
- Identifizieren von leeren Zellen des zweiten Satzes, die benachbart von geschnittenen Zellen des ersten Satzes sind;
- Hinzufügen der identifizierten Zellen des zweiten Satzes zu dem Satz von Zellen des ersten Satzes;
∘ Hinzufügen einer Nten Schicht durch Durchführen von Folgendem:
- Identifizieren von leeren Zellen des zweiten Satzes, die benachbart von geschnittenen Zellen des ersten Satzes sind;
- Hinzufügen der identifizierten leeren Zellen des zweiten Satzes zu einem dritten Satz von Zellen;
• Berechnen (S30) eines oder mehrerer angrenzender Sätze von Zellen des dritten Satzes;
• Identifizieren (S40) von einem oder mehreren angrenzenden Sätzen, die den diskretisierten modellierten Gegenstand umschließen, und wobei in dem dritten Satz nur Zellen der identifizierenden einen oder mehreren angrenzenden Sätze gehalten werden, wobei das Identifizieren des einen oder der mehreren angrenzenden Sätze, die den diskretisierten modellierten Gegenstand umschließen, weiter Folgendes umfasst:
∘ Bestimmen, ob der eine oder die mehreren bestimmten angrenzenden Sätze von einem oder mehreren anderen bestimmten angrenzenden Sätzen umschlossen sind;
∘ wenn ein oder mehrere bestimmte angrenzende Sätze von einem oder mehreren anderen bestimmten angrenzenden Sätzen umschlossen sind, Entfernen der Zellen der umschlossenen angrenzenden Sätze von Zellen des dritten Satzes durch Hinzufügen der Zellen der bestimmten angrenzenden Sätze von Zellen zu einem vierten Satz von Zellen;
• Reduzieren (S50) des ersten Satzes von Zellen durch Durchführen für jede hinzugefügte N-1 Schicht von Folgendem:
∘ Identifizieren von Zellen des dritten Satzes, die Nachbarn von geschnittenen Zellen des ersten Satzes sind;
∘ Hinzufügen der Zellen des ersten Satzes, umfassend als Nachbarn die identifizierten Zellen des dritten Satzes zu dem dritten Satz von Zellen; und
• Berechnen (S60) der Umhüllung des bereitgestellten modellierten Gegenstands von den Zellen des dritten Satzes;
wobei das Verfahren weiter das Speichern des Rasters von Zellen in eine Datenstruktur, das Teilen des ersten, zweiten, dritten und vierten Satzes von Zellen in mehrere, die sich nur auf die Voxel des gleichen Unterrasters beziehen, das Teilen des Rasters von Zellen in gleich große Unterzellen von 32 Zellen für jede Abmessung [x, y, z] des Rasters und Codieren der Position [x, y, z] einer Zelle eines Unterrasters in 15 Bits, wobei die Bits per Ordinate reserviert sind;
und wobei die Datenstruktur 9 Bytes für ein homogenes Untervolumen aufweist, wobei das homogene Untervolumen nur Zellen aufweist, die zu einem gleichen Satz von Zellen aus dem ersten, zweiten, dritten oder vierten Satz von Zellen gehören, wobei die Datenstruktur 8192 Bytes aufweist, die dynamisch einem nicht homogenen Untervolumen zugeordnet sind, wobei jedes Byte vier Zellen eines gleichen Satzes von Zellen codiert, wobei das nicht homogene Untervolumen Zellen aufweist, die zu zwei oder mehr Sätzen von Zellen aus dem ersten, zweiten, dritten und/oder vierten Satz von Zellen gehören.

2. Computer-implementiertes Verfahren nach Anspruch 1, wobei das Reduzieren des ersten Satzes von Zellen für jede hinzugefügte *N*-1 Schicht weiter Folgendes umfasst:
• Identifizieren von Zellen des vierten Satzes, die Nachbarn von Zellen des ersten Satzes sind;
• Hinzufügen der Zellen des ersten Satzes, umfassend als Nachbarn die identifizierten Zellen des vierten Satzes, zum vierten Satz von Zellen;
• für jede Zelle des ersten Satzes, der keine identifizierten Zellen des vierten Satzes oder keine identifizierten Zellen des dritten Satzes als Nachbar aufweist:
∘ Bestimmen von Zellen, die die Zelle umschließen, wodurch eine Nachbarschaft von Zellen gebildet wird;
∘ Hinzufügen der Zelle zu dem dritten Satz von Zellen, wenn eine Zelle der Nachbarschaft von Zellen eine Zelle des dritten Satzes oder des zweiten Satzes schneidet; oder
∘ Hinzufügen der Zelle zum vierten Satz von Zellen, wenn keine Zelle der Nachbarschaft von Zellen eine Zelle des dritten Satzes oder des zweiten Satzes schneidet.

3. Computer-implementiertes Verfahren nach Anspruch 2, wobei das Bestimmen von Zellen, die die Zelle umschließen, Folgendes umfasst:
• Nachverfolgen einer Vielzahl von Strahlen, beginnend mit der Zelle des ersten Satzes;
• Identifizieren von Zellen der hinzugefügten *N*-1 Schicht, die von den Strahlen geschnitten werden;
• Bilden der Nachbarschaft von Zellen mit den identifizierten Zellen, die von den Strahlen geschnitten werden.

4. Computer-implementiertes Verfahren nach Anspruch 3, wobei die Strahlen mit einer Länge nachverfolgt werden, die für jede der Reduzierungen des ersten Satzes von Zellen abnimmt, wobei die anfängliche Länge der Strahlen *N* Zellen ist.

5. Computer-implementiertes Verfahren nach einem der Ansprüche 1 bis 4, weiter umfassend, vor dem Berechnen der Umhüllung, Durchführen eines Ausdünnens der Zellen des dritten Satzes, der den diskretisierten modellierten Gegenstand umschließt, durch:
• Identifizieren von Zellen des dritten Satzes, aufweisend als Nachbarn nur Zellen, die zum zweiten oder dritten Satz von Zellen gehören;
• Hinzufügen der identifizierten Zellen zu dem zweiten Satz von Zellen.

6. Computer-implementiertes Verfahren nach einem der Ansprüche 1 bis 5, weiter umfassend, vor dem Berechnen der Umhüllung:
• Eindringen des einen oder der mehreren angrenzenden Sätze von Zellen des dritten Satzes, die den diskretisierten modellierten Gegenstand umschließen, durch:
∘ Identifizieren von Zellen des vierten Satzes von Zellen, die Nachbarn von Zellen des dritten Satzes sind;
∘ Hinzufügen der identifizierten Zellen des Vierten zum dritten Satz von Zellen.

7. Computer-implementiertes Verfahren nach einem der Ansprüche 1 bis 6, wobei das Berechnen der Umhüllung des bereitgestellten modellierten Gegenstands von den Zellen des dritten Satzes weiter Folgendes umfasst:
• Identifizieren von Zellen des dritten Satzes, umfassend als Nachbar Zellen des zweiten Satzes von Zellen;
• Berechnen der Umhüllung des bereitgestellten modellierten Gegenstands von den identifizierten Zellen des dritten Satzes.

8. Computer-implementiertes Verfahren nach einem der Ansprüche 1 bis 7, wobei:
• der bereitgestellte modellierte Gegenstand eine 2d-Geometrie ist und das Raster von Zellen ein 2d-Raster ist, wobei Nachbarzellen koordinatenweise Nachbarn in einer der Richtungen x oder y sind; oder
• der bereitgestellte modellierte Gegenstand eine 3d-Geometrie ist und das Raster von Zellen ein Raster von Voxeln ist, wobei Nachbarzellen koordinatenweise Nachbarn in einer der Richtungen z, y oder z sind.

9. Computer-implementiertes Verfahren nach Anspruch 8, wobei das Berechnen der Umhüllung des bereitgestellten modellierten Gegenstands von den identifizierten Zellen des dritten Satzes weiter Folgendes umfasst:
• wenn der bereitgestellte modellierte Gegenstand eine 2d-Geometrie ist, wird die durch 2D-Vektorgraphiken dargestellt ist und das Raster von Zellen ein 2d-Raster ist, die Umhüllung durch Umwandeln der Zellen in einen Satz von 2d-Linien berechnet; oder
• wenn der bereitgestellte modellierte Gegenstand eine 3d-Geometrie ist, die aus einer Masche besteht, und das Raster von Zellen ein Raster von Voxeln ist, wird die Umhüllung durch Umwandeln der identifizierten Zellen in eine vierseitige Masche berechnet.

10. Computer-implementiertes Verfahren nach Anspruch 9, wobei, wenn der bereitgestellte modellierte Gegenstand eine 3d-Geometrie ist, die Umhüllung des bereitgestellten modellierten Gegenstands durch Umwandlung in eine vierseitige Masche der Seiten jeder Zelle des dritten Satzes, die benachbart zu Zellen des zweiten Sätze sind, berechnet wird.

11. Datenstruktur, die ein Raster von Zellen speichert, wobei die Datenstruktur das Raster von Zellen in gleich große Unterraster unterteilt, wobei jedes Unterraster Zeiger auf mindestens einen des ersten, zweiten, dritten und vierten Satzes von Zellen des Verfahrens nach einem der Ansprüche 2 bis 10 beinhaltet.

12. Computerprogramm, umfassend Anweisungen zur Durchführung des Verfahrens nach einem der Ansprüche 1 bis 10.

13. Computerlesbares Speichermedium, auf dem ein Computerprogramm nach Anspruch 12 gespeichert ist.

14. System, umfassend einen Prozessor, der mit einem Speicher und einer graphischen Benutzeroberfläche gekoppelt ist, wobei auf dem Speicher das Computerprogramm nach Anspruch 12 aufgezeichnet ist.

## Revendications

1. Procédé mis en oeuvre par ordinateur pour concevoir une enveloppe d'un objet modélisé, le procédé comprenant :
• la fourniture (S10) d'un objet modélisé qui est discrétisé en une grille de cellules, ce qui permet d'obtenir une grille comprenant un premier ensemble de cellules coupé par l'objet modélisé et un deuxième ensemble de cellules vides, deux cellules de la grille étant voisines si au moins une des coordonnées d'une cellule est un successeur ou un prédécesseur des coordonnées de l'autre cellule ;
• l'ajout (S20) de *N* couches adjacentes à l'objet modélisé, N étant un nombre entier positif défini comme N=(« *taille d'espace* »/2) 1, où « taille d'espace » est une valeur fournie, par :
∘ ajout de *N*-1 couches en effectuant pour chaque couche :
- l'identification des cellules vides du deuxième ensemble qui sont voisines de cellules coupées du premier ensemble ;
- l'ajout des cellules identifiées du deuxième ensemble à l'ensemble de cellules du premier ensemble ;
∘ ajout d'une *N*^{ème} couche en effectuant :
- l'identification des cellules vides du deuxième ensemble qui sont voisines de cellules coupées du premier ensemble ;
- l'ajout des cellules vides identifiées du deuxième ensemble à un troisième ensemble de cellules ;
• le calcul (S30) d'un ou plusieurs ensembles de cellules contigus du troisième ensemble ;
• l'identification (S40) d'un ou plusieurs ensembles contigus qui entourent l'objet modélisé discrétisé et le maintien dans le troisième ensemble uniquement des cellules des un ou plusieurs ensembles contigus identifiés, l'identification des un ou plusieurs ensembles contigus qui entourent l'objet modélisé discrétisé comprenant en outre :
∘ la détermination du fait qu'un ou plusieurs ensembles contigus déterminés sont ou non entourés par un ou plusieurs autres ensembles contigus déterminés ;
∘ si un ou plusieurs ensembles contigus déterminés sont entourés par un ou plusieurs autres ensembles contigus déterminés, le retrait des cellules des ensembles de cellules contigus entourés du troisième ensemble par ajout des cellules des ensembles de cellules contigus déterminés à un quatrième ensemble de cellules ;
• la réduction (S50) du premier ensemble de cellules, en effectuant pour chaque N-1 couches ajoutées :
∘ l'identification de cellules du troisième ensemble qui sont voisines des cellules du premier ensemble ;
∘ l'ajout des cellules du premier ensemble ayant comme voisines les cellules identifiées du troisième ensemble au troisième ensemble de cellules ; et
• le calcul (S60) de l'enveloppe de l'objet modélisé fourni à partir des cellules du troisième ensemble ;
le procédé comprenant en outre le stockage de la grille de cellules dans une structure de données, la division des premier, deuxième, troisième et quatrième ensembles de cellules en plusieurs cellules en référence uniquement aux voxels de la même sous-grille, la division de la grille de cellules en sous-cellules de taille égale de 32 cellules pour chaque dimension [x,y,z] de la grille, et le codage de la position [x,y,z] d'une cellule d'une sous-grille en 15 bits, 5 bits étant réservés par ordonnée ; et
la structure de données ayant 9 octets pour un sous-volume homogène, le sous-volume homogène ayant uniquement des cellules appartenant à un même ensemble de cellules parmi les premier, deuxième, troisième ou quatrième ensembles de cellules, la structure de données ayant 8192 octets étant allouée de manière dynamique pour un sous-volume inhomogène, chaque octet codant quatre cellules d'un même ensemble de cellules, le sous-volume inhomogène ayant des cellules appartenant à au moins deux ensembles de cellules parmi les premier, deuxième, troisième et/ou quatrième ensembles de cellules.

2. Procédé mis en oeuvre par ordinateur selon la revendication 1, dans lequel la réduction du premier ensemble de cellules comprend en outre, pour chaque *N*-1 couches ajoutées :
• l'identification des cellules du quatrième ensemble qui sont voisines des cellules du premier ensemble ;
• l'ajout des cellules du premier ensemble ayant comme voisines les cellules identifiées du quatrième ensemble au quatrième ensemble de cellules ;
• pour chaque cellule du premier ensemble n'ayant aucune cellule identifiée du quatrième ensemble ou aucune cellule identifiée du troisième ensemble comme voisine :
∘ la détermination des cellules entourant la cellule, formant ainsi un voisinage de cellules ;
∘ l'ajout de la cellule au troisième ensemble de cellules si une cellule quelconque du voisinage de cellules coupe une cellule du troisième ensemble ou du deuxième ensemble ; ou
∘ l'ajout de la cellule au quatrième ensemble de cellules si aucune cellule du voisinage de cellules ne coupe une cellule du troisième ensemble ou du deuxième ensemble.

3. Procédé mis en oeuvre par ordinateur selon la revendication 2, dans lequel la détermination de cellules entourant la cellule comprend :
• le traçage d'une pluralité de rayons à partir de la cellule du premier ensemble ;
• l'identification de cellules de ladite couche N-1 ajoutée coupée par les rayons ;
• la formation du voisinage de cellules avec les cellules identifiées coupées par les rayons.

4. Procédé mis en oeuvre par ordinateur selon la revendication 3, dans lequel les rayons sont tracés avec une longueur qui diminue pour chaque réduction du premier ensemble de cellules, la longueur initiale des rayons étant de *N* cellules.

5. Procédé mis en oeuvre par ordinateur selon l'une quelconque des revendications 1 à 4, comprenant en outre, avant le calcul de l'enveloppe, la réalisation d'un amincissement des cellules du troisième ensemble qui entourent l'objet modélisé discrétisé par :
• identification des cellules du troisième ensemble ayant pour voisines uniquement des cellules appartenant aux deuxième ou troisième ensembles de cellules ;
• ajout des cellules identifiées au deuxième ensemble de cellules.

6. Procédé mis en oeuvre par ordinateur selon l'une quelconque des revendications 1 à 5, comprenant en outre, avant le calcul de l'enveloppe :
• la pénétration des un ou plusieurs ensembles de cellules contigus du troisième ensemble qui entourent l'objet modélisé discrétisé par :
∘ identification des cellules du quatrième ensemble de cellules qui sont voisines de cellules du troisième ensemble ;
∘ ajout des cellules identifiées du quatrième au troisième ensemble de cellules.

7. Procédé mis en oeuvre par ordinateur selon l'une quelconque des revendications 1 à 6, dans lequel le calcul de l'enveloppe de l'objet modélisé fourni à partir des cellules du troisième ensemble comprend en outre :
• l'identification des cellules du troisième ensemble ayant pour voisines les cellules du deuxième ensemble de cellules ;
• le calcul de l'enveloppe de l'objet modélisé fourni à partir des cellules identifiées du troisième ensemble.

8. Procédé mis en oeuvre sur ordinateur selon l'une des revendications 1 à 7, dans lequel :
• l'objet modélisé fourni est une géométrie 2d et la grille de cellules est une grille 2d, dans laquelle les cellules voisines sont des voisines en termes de coordonnées dans l'une des directions x ou y ; ou
• l'objet modélisé fourni est une géométrie 3d et la grille de cellules est une grille de voxels, dans laquelle les cellules voisines sont des voisines en termes de coordonnées dans l'une des directions x, y ou z.

9. Procédé mis en oeuvre par ordinateur selon la revendication 8, dans lequel le calcul de l'enveloppe de l'objet modélisé fourni à partir des cellules identifiées du troisième ensemble comprend en outre :
• si l'objet modélisé fourni est une géométrie 2d représentée par des graphiques vectoriels 2d et que la grille de cellules est une grille 2d, l'enveloppe est calculée en convertissant les cellules en un ensemble de lignes 2d ; ou
• si l'objet modélisé fourni est une géométrie 3d constituée d'un maillage et que la grille de cellules est une grille de voxels, l'enveloppe est calculée en convertissant les cellules identifiées en un maillage quadrilatéral.

10. Procédé mis en oeuvre par ordinateur selon la revendication 9, dans lequel, lorsque l'objet modélisé fourni est une géométrie 3d, l'enveloppe de l'objet modélisé fourni est calculée en convertissant en un maillage quadrilatéral les côtés de chaque cellule du troisième ensemble qui sont adjacents aux cellules du deuxième ensemble.

11. Structure de données stockant une grille de cellules, la structure de données partitionnant la grille de cellules en sous-grilles de taille égale, chaque sous-grille comprenant des pointeurs vers au moins l'un des premier, deuxième, troisième et quatrième ensembles de cellules du procédé selon l'une quelconque des revendications 2 à 10.

12. Programme informatique comprenant des instructions pour réaliser le procédé selon l'une quelconque des revendications 1 à 10.

13. Support de stockage lisible par ordinateur sur lequel est enregistré un programme informatique selon la revendication 12.

14. Système comprenant un processeur couplé à une mémoire et une interface utilisateur graphique, le programme informatique selon la revendication 12 étant enregistré sur la mémoire.
